(19) **Europäisches Patentamt / European Patent Office / Office européen des brevets**

(11) **EP 4 127 827 B1**

(12) **FASCICULE DE BREVET EUROPEEN**

(45) Date de publication et mention de la délivrance du brevet:
**01.05.2024 Bulletin 2024/18**

(21) Numéro de dépôt: **21716069.6**

(22) Date de dépôt: **23.03.2021**

(51) Classification Internationale des Brevets (IPC):
**G02F 1/095** (2006.01)   **G02F 1/35** (2006.01)

(52) Classification Coopérative des Brevets (CPC):
**G02F 1/0955; G02F 1/3511; G02F 1/3513**

(86) Numéro de dépôt international:
**PCT/EP2021/057350**

(87) Numéro de publication internationale:
**WO 2021/191180 (30.09.2021 Gazette 2021/39)**

(54) **COMPOSANT OPTIQUE NON RECIPROQUE INTEGRABLE, ISOLATEUR OPTIQUE, CIRCULATEUR OPTIQUE ET CIRCUIT INTEGRE**

INTEGRIERBARE NICHTREZIPROKE OPTISCHE KOMPONENTE, OPTISCHER ISOLATOR, OPTISCHER ZIRKULATOR UND INTEGRIERTE SCHALTUNG

INTEGRABLE NON-RECIPROCAL OPTICAL COMPONENT, OPTICAL ISOLATOR, OPTICAL CIRCULATOR AND INTEGRATED CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.03.2020 FR 2003003**

(43) Date de publication de la demande:
**08.02.2023 Bulletin 2023/06**

(73) Titulaires:
- **Université Paris-Saclay**
  **91190 Saint Aubin (FR)**
- **CENTRE NATIONAL DE LA RECHERCHE SCIENTIFIQUE**
  **75016 Paris (FR)**

(72) Inventeurs:
- **ABADIAN, Sevag**
  **91405 Palaiseau (FR)**
- **DAGENS, Béatrice**
  **92160 Antony (FR)**
- **MAGNO, Giovanni**
  **91120 Palaiseau (FR)**
- **YAM, Vy**
  **92160 Antony (FR)**

(74) Mandataire: **IPAZ**
**Bâtiment Platon**
**Parc Les Algorithmes**
**91190 Saint-Aubin (FR)**

(56) Documents cités:
**EP-A1- 2 525 200        EP-B1- 2 525 200**
**WO-A1-2013/057444      WO-A1-2017/136459**
**US-A1- 2014 161 405**

- **MAGNO GIOVANNI ET AL: "Integrated Magnetoplasmonic Nanostructures for Nonreciprocal Optical Devices", 2016 ASIA COMMUNICATIONS AND PHOTONICS CONFERENCE (ACP), OSA, 2 novembre 2016 (2016-11-02), pages 1-3, XP033534496,**
- **MATHIAS VANWOLLENGHEM LIUBOV MAGDENKO, PIERRE BEAUVILLAIN, BÉATRICE DAGENS: "Compact integrated optical isolation based on extraordinary dichroic transmission through a magnetoplasmonic waveguide grating", SPIE PHOTONICS EUROPE, 2010, BRUSSELS, BELGIUM, vol. 7712, 10 mai 2010 (2010-05-10), XP040536372, BRUSSELS, BELGIUM**

**Description**

L'invention se rapporte à un composant optique non-réciproque intégrable, notamment isolateur ou circulateur optique, avec guidage notamment sub-longueur d'onde entre deux interfaces magnéto-plasmoniques formées chacune entre un diélectrique et un métal.

D'un port optique, un signal d'entrée parcourt une région de sélection fournissant un signal sélectionné dont l'énergie est concentrée dans un seul mode plasmonique, LRSPP (pour "Long Range Surface Polariton Plasmon") ou SRSPP (pour "Short Range Surface Polariton Plasmon"), notamment par une ouverture de sélection d'une largeur pour laquelle ces modes présentent des impédances optiques significativement différentes entre elles, dont l'une est proche de ou égale à l'impédance optique d'entrée, suffisamment pour obtenir un signal optique sélectionné exploitable dans le mode plasmonique choisi.

Le signal sélectionné traverse une région de différentiation, qui crée ou augmente l'asymétrie existant entre les deux interfaces magnéto-plasmoniques, pour concentrer son énergie sur une seule interface magnéto-plasmonique.

Le signal différentié traverse une région de traitement non-réciproque formée par deux interfaces magnéto-plasmoniques de géométries non équivalentes, notamment des cavités d'absorption d'un seul côté ou une déviation chacune vers un port optique de sortie différent. Le signal d'entrée subira ainsi un traitement différent d'un signal inverse.

Elle concerne en outre un isolateur optique, un circulateur optique, et un circuit intégré incluant un tel composant sous une forme intégrée.

**Etat de la technique**

Les signaux optiques guidés sont utilisés dans de nombreux domaines, par exemple dans les télécommunications mais aussi dans de nombreux autres domaines tels que les capteurs ou les circuits de traitement de données. Au sein de circuits optiques, ou photoniques, différents types de composants sont utilisés pour traiter ou distribuer de tels signaux, dans différentes longueurs d'ondes comme par exemple de l'ordre de $1,55\,\mu m$ pour les télécommunications. La miniaturisation de tels circuits est activement recherchée pour gagner en compacité et en puissance de traitement.

Depuis une vingtaine d'années, la photonique a été largement développée à l'échelle nanométrique, ce qui permet en outre une augmentation des interactions lumière-matière avec de nombreuses applications en photonique et en opto-électronique dans les domaines de l'émission, de la détection, de l'imagerie ou du guidage optique.

Pour réaliser certains types de fonctionnalités au sein d'un circuit optique, il est nécessaire de disposer de composants qui présentent une non réciprocité, c'est-à-dire qui traitent un signal optique différemment selon le sens de propagation de ce signal.

Il est connu de réaliser un composant optique non réciproque en utilisant des propriétés magnéto-optiques de type effet Kerr transverse (TMOKE en Anglais, pour "Transverse Magneto Optical Kerr Effect"), associées à une couche métallique fournissant un effet de guidage plasmonique, c'est-à-dire qui réalise une résonance entre le signal optique dans le guide et les électrons de surface de la paroi métallique.

Il peut s'agir par exemple d'isolateurs optiques qui utilisent la non réciprocité en absorption pour laisser passer un signal dans un sens mais le bloquer dans l'autre sens ou l'amoindrir de façon conséquente ; comme décrit dans la publication de Van Parys et al. « Transverse magnetic mode nonreciprocal propagation in an amplifying AlGaInAs/InP optical wave guide isolator », Applied Physics Letters 88, 071115 (2006).

Il peut aussi s'agir de dispositifs de circulateurs comprenant plus de deux ports optiques reliés optiquement entre eux en permanence, dans lesquels la circulation d'un signal entre deux ports donnés ne se fait que dans un seul sens, qui utilisent la non réciprocité en indice pour produire des décalages de phase non réciproques ; comme décrit dans la publication de Takei et Mizumoto : « Design and Simulation of Silicon Waveguide Optical Circulator employing Non Reciprocal Phase Shift », Jpn. J. Appl. Phys. 49 (2010) 052203.

De tels composants non-réciproques sont basés sur un signal optique qui est confiné dans un guide optique dont une seule des parois génère de tels effets magnéto-plasmoniques comme par exemple dans le document US8849072, à la différence des circuits optiques réciproques à guidage plasmonique dans lesquels le guidage s'effectue entre deux parois plasmoniques.

Cependant, ces composants non-réciproques restent encombrants et difficiles à intégrer dans un circuit intégré, car cet effet de non-réciprocité nécessite une certaine amplification pour être suffisamment efficace. Cet effet non-réciproque est en général exalté par un résonateur, par exemple par un résonateur en anneau comme décrit dans le document FR 2 981 761, ce qui représente un encombrement mais aussi une complexité et des contraintes supplémentaires.

Ainsi, il est difficile et/ou complexe donc coûteux de réaliser de tels dispositifs qui soient vraiment compacts et encore plus qui soient intégrés sur un même composant, et par exemple d'y intégrer de façon efficiente des sources lasers et leurs circuits de distribution.

Aucune solution proposée jusque-là n'a été assez performante pour être intégrée dans un circuit photonique.

Les seuls composants isolateurs ou circulateurs existant commercialement sont à base de grenats massifs assemblés avec des polariseurs et font plusieurs centimètres de long, en optique non-guidée, mais couplés à des fibres optiques.

Un but de l'invention est de pallier en tout ou partie les inconvénients de l'état de la technique.

En particulier, il est recherché d'obtenir un traitement non réciproque d'un signal optique guidé, au moyen d'un composant discret ou formant une partie de circuit optique, en minimisant l'encombrement et/ou en facilitant son intégration.

**Présentation de l'invention**

L'invention propose un composant optique comprenant au moins un premier port ou guide optique, et un deuxième port ou guide optique, communiquant entre eux de façon optique non réciproque ; lesquels connectent ou permettent de connecter ledit composant au sein d'un circuit optique guidé, de façon à pouvoir échanger un signal optique avec ledit circuit optique d'une part dans un premier sens et d'autre part dans un deuxième sens, qui est opposé au premier sens, au travers d'au moins une région à guidage magnéto-plasmonique.

Le terme magnéto-plasmonique désigne ici une combinaison de guidage plasmonique et d'effet magnéto-optique, ce dernier étant typiquement de type TMOKE.

Le terme de guidage plasmonique s'entend ici comme réalisant une interaction de surface avec le métal, même si ce métal est d'un type qui n'est pas toujours considéré en lui-même comme "plasmonique", par exemple du Fer-Cobalt.

Plus particulièrement, le composant selon invention a été conçu et simulé, et est agencé et déterminé pour traiter un signal optique, d'une longueur d'onde inférieure à $50\mu m$, et en particulier inférieure à $20\mu m$ ou $10\mu m$, et plus particulièrement inférieure à $3\mu m$, par exemple autour de $1,55\mu m$ ou d'une autre fréquence utilisée en télécommunication.

Selon l'invention, ledit composant comporte une pluralité de régions qui peuvent être parcourues successivement par un signal optique voyageant, dans le premier sens, depuis ledit premier port optique vers ledit deuxième port optique.

Cette pluralité comprend au moins, dans cet ordre et par exemple de façon contiguë entre tout ou partie d'entre elles : une région de sélection, une région de différentiation, et une région de traitement non réciproque.

La région de sélection est agencée pour :

- recevoir en entrée un signal optique d'entrée s'y propageant selon une impédance optique d'entrée $z0_{eff}$, c'est-à-dire une impédance du mode guidé, laquelle est typiquement proportionnelle à l'inverse d'un indice effectif d'entrée. Ce signal optique d'entrée est reçu typiquement sous une forme guidée mais pas obligatoirement. Dans cette région de sélection, et possiblement aussi en amont, le guidage peut être plasmonique ou non, et se présente typiquement sous une forme polarisée et de préférence polarisée TE ; et
- émettre en sortie, au moyen d'un guidage plasmonique, un signal optique dit sélectionné comportant un premier mode plasmonique et un deuxième mode plasmonique, dans lequel le deuxième mode plasmonique présente une amplitude nulle, ou significativement plus faible que le premier mode plasmonique typiquement d'un facteur au moins 50 en intensité et de préférence d'un facteur 100 ; ces premier et deuxième modes plasmoniques étant définis comme étant :

   ◦ pour l'un, de préférence le premier mode plasmonique, le mode LR (ou LRSPP, pour "Long Range Surface Polariton Plasmon") et
   ◦ pour l'autre, de préférence respectivement le deuxième plasmonique, le mode SR (ou SRSPP, pour "Short Range Surface Polariton Plasmon").

La région de différentiation est agencée pour recevoir en entrée le signal optique sélectionné provenant de la région de sélection, dans une partie d'entrée, et le guider jusqu'à une partie de sortie où il forme un signal optique dit différentié, par une âme de guidage dite âme de différentiation s'étendant entre au moins deux interfaces dites de différentiation. Cet agencement inclut par exemple la présence d'une aimantation.

Ces interfaces de différentiation :

- sont formées entre un matériau d'âme et au moins un matériau extérieur, dont l'un est diélectrique et l'autre est métallique,
- sont situées sur deux côtés opposés de cette âme de guidage, et
- sont déterminées pour réaliser entre elles un guidage magnéto-plasmonique.

Dans cette région de différentiation, la partie de sortie est agencée pour présenter, entre lesdites interfaces de différentiation, une largeur de différentiation Wd choisie pour que le premier mode plasmonique du signal présente une asymétrie d'amplitude, entre lesdites interfaces de différentiation, supérieure à un seuil déterminé.

Cette région de différentiation est ainsi agencée pour fournir en sortie un signal optique asymétrique, dit signal différentié, dont l'amplitude est concentrée sur la première interface de différentiation. C'est-à-dire qu'elle est plus forte sur la première interface de différentiation et plus faible voire négligeable sur la deuxième interface de différentiation, typiquement dans un rapport supérieur à 50 et en particulier supérieur ou égal à 100.

La région de traitement non réciproque est agencée pour recevoir en entrée le signal différentié provenant de la région de différentiation, et le guider par une partie de traitement jusqu'à une région de sortie où il forme un signal optique dit traité. Ce guidage se fait dans une âme de guidage, dite âme de traitement, qui s'étend entre au moins une première interface de traitement et une deuxième interface de traitement. Cet agencement inclut par exemple la présence d'une aimantation.

Ces interfaces de traitement :

- sont formées chacune entre un matériau d'âme de traitement et un matériau extérieur, dont l'un est diélectrique et l'autre est métallique,
- sont situées sur les mêmes deux côtés opposés que les première et respectivement deuxième interfaces de différentiation ;
- sont déterminées pour réaliser entre elles un guidage magnéto-plasmonique ; et
- sont agencées pour présenter, entre l'entrée et la sortie de ladite région de traitement, des géométries qui ne sont pas équivalentes l'une de l'autre, en particulier dans leur effet sur le signal sur la globalité de leur longueur, par exemple en introduisant entre elles une rupture de la symétrie spatiale.

Cette région de traitement non réciproque est ainsi agencée pour fournir en sortie, dans le premier sens, un signal optique traité dont l'amplitude a subi, uniquement ou principalement, un traitement produit par la géométrie de la seule première interface de traitement, car l'énergie de ce signal est concentrée sur la première interface de traitement.

De son côté, un signal dit inverse traversant ladite région de traitement non réciproque dans le deuxième sens, subira un traitement produit par la géométrie de la seule deuxième interface de traitement (si ce signal inverse est lui aussi différentié) ou par l'ensemble des deux interfaces de traitements, fournissant ainsi un signal inverse traité ayant subi un traitement différent de celui subi par le signal traité voyageant dans le premier sens.

Typiquement, chaque port comporte toute la suite de ces régions : sélection, différentiation puis traitement. Typiquement, deux ports communiquant entre eux partagent une même région de traitement, ou une partie d'une même région de traitement. Ainsi, la ou les régions de traitement qui relient deux ports entre eux recevront toujours un signal différentié, dans le premier sens et dans le deuxième sens. Et chacun d'eux subira uniquement le traitement produit par la géométrie de l'interface de traitement qui constitue pour lui la première interface de traitement, c'est-à-dire une interface et une géométrie différente selon le sens de parcours.

Par exemple, si la région de différentiation est identique pour chaque port et est agencée pour affaiblir ou annuler l'amplitude du signal sur l'interface de gauche considérée dans le sens de propagation, alors le signal différentié sera concentré sur l'interface de droite et le signal traité aura subi le traitement déterminé par cette seule interface de droite.

Au sein d'un canal reliant deux ports, on peut considérer que l'un des côtés sera parcouru par les plasmons des signaux se propageant dans le premier sens, et que l'autre côté sera parcouru par les plasmons des signaux se propageant dans le deuxième sens.

Comme on le comprend, cette succession de processus de différentiation et traitement est réalisée par un guidage magnéto-plasmonique qui existe sur deux côtés opposés de l'âme de guidage, à la différence des composants de l'art antérieur.

Dans l'art antérieur, un guidage entre deux interfaces magnéto-plasmonique proches est classiquement considéré comme n'ayant pas d'effet de non-réciprocité.

De façon différente, les inventeurs ont identifié et mis en oeuvre une asymétrie qui peut être obtenue dans la répartition de l'intensité du signal entre ces deux interfaces, en choisissant une ou des largeurs spécifiques pour l'écartement de ces interfaces. Cela permet à l'invention de traiter le signal d'entrée pour que son intensité se concentre sur une seule de ces deux interfaces plasmoniques, et donc ne subisse le traitement que d'une seule de ces interfaces. La non-réciprocité est alors obtenue en combinant cette concentration latérale avec un traitement différent d'une interface à l'autre.

Selon une particularité, la région de sélection présente :

- une partie d'entrée formant un guidage optique, de préférence uniquement optique mais possiblement aussi plasmonique.

- une partie de sortie formant un guidage magnéto-optique plasmonique entre deux interfaces magnéto-plasmoniques.

Ces parties d'entrée et de sortie communiquent entre elles par une ouverture de sélection qui présente une largeur de sélection We, mesurée entre les deux interfaces plasmoniques, typiquement plus étroite que la largeur d'entrée de la partie de sélection.

Le signal optique d'entrée reçu dans la partie d'entrée vient ainsi exciter dans la partie de sortie un signal optique, qui sort de la partie de sortie pour former le signal optique sélectionné, qui inclut le premier mode plasmonique et le deuxième mode plasmonique.

Le guidage optique de cette partie d'entrée de sélection présente, pour le signal reçu en entrée, une impédance optique d'entrée $z0_{eff}$, c'est-à-dire l'impédance optique du mode guidé, par exemple sous la forme d'un indice effectif.

Selon cette particularité, la largeur de sélection We est déterminée, en combinaison avec la valeur de l'impédance optique d'entrée z0eff, pour que :

  ∘ le premier mode plasmonique présente une première impédance optique z1eff qui est sensiblement égale à l'impédance optique d'entrée z0eff, c'est-à-dire au moins suffisamment proche pour obtenir un signal optique sélectionné exploitable dans ce premier mode plasmonique, et

  ∘ le deuxième mode plasmonique présente une deuxième impédance optique z2eff qui est significativement différente de la première impédance optique z1eff, c'est-à-dire suffisamment différent pour obtenir un affaiblissement du signal optique sélectionné dans le deuxième mode plasmonique, par exemple d'un facteur 50 voire d'un facteur 100.

En ajustant la largeur de sélection, et possiblement d'autres caractéristiques qui influent sur l'impédance optique, on obtient ainsi que le signal d'entrée excite, dans la partie de sortie et au travers de l'ouverture de sélection, un mode optique selon le premier mode plasmonique, à l'exclusion du deuxième mode plasmonique (ou avec une amplitude significativement plus importante que celle du deuxième mode plasmonique). Le signal optique qui sort de la partie de sortie (de la région de sélection) forme ainsi un signal optique sélectionné qui présente uniquement le seul premier mode plasmonique.

On notera que l'impédance optique est définie par la formule :

[Math. 1]

$$Z_{milieu} = \sqrt{\frac{\mu_r \mu_0}{\varepsilon_r \varepsilon_0}}$$

L'impédance optique est donc proportionnelle à l'inverse de l'indice effectif n ; avec $n^2 \sim = \varepsilon$ où $\varepsilon = \varepsilon_r \varepsilon_0$, $\varepsilon$ est la permittivité, $\varepsilon_r$ est la permittivité relative, $\varepsilon_0$ est la permittivité du vide, $\mu_r$ est la perméabilité relative et $\mu_0$ est la perméabilité du vide.

Dans de nombreux cas, l'impédance optique du mode guidé est directement liée à l'indice effectif. Ainsi, dans un grand nombre de modes de réalisation de l'invention, le terme "impédance optique" peut être remplacé par le terme "indice effectif".

D'autres types d'agencements permettent de sélectionner le premier mode plasmonique en éliminant le deuxième mode plasmonique dans un signal, et peuvent aussi être utilisés dans l'invention pour réaliser une telle sélection, et produire le signal optique sélectionné.

Selon une autre particularité, de préférence combinée avec la précédente mais non obligatoirement, la région de différentiation présente une géométrie d'une largeur croissante depuis sa largeur d'entrée (pouvant être par exemple la même que la largeur de sélection We) jusqu'à la largeur de différentiation Wd, par exemple de façon symétrique autour de l'âme de différentiation, et/ou de façon continûment croissante voire régulièrement croissante.

Dans le cas d'une sélection par ouverture à largeur de sélection We, la région de différentiation reçoit un signal sélectionné qui ne comprend qu'un seul mode plasmonique. Cependant, cette largeur de sélection correspond typiquement à une configuration dans laquelle le mode plasmonique sélectionné, c'est-à-dire le premier mode plasmonique, ne présente pas une asymétrie très significative.

Au sein de la région de différentiation, une telle variation de largeur est choisie pour arriver en sortie à une largeur de différentiation pour laquelle ce premier mode plasmonique présente une asymétrie importante entre l'interface de droite et l'interface gauche, définies par rapport au sens de propagation du signal, c'est-à-dire respectivement la première interface et la deuxième interface.

En sortie de cette région de différentiation, le premier mode plasmonique est ainsi concentré sur la première interface. Si le deuxième mode plasmonique était encore présent, il serait quant à lui concentré sur la deuxième interface. Du fait que ce deuxième mode plasmonique a été supprimé ou minimisé précédemment par la région de sélection, le signal optique différentié concentre son intensité sur la seule première intensité.

Typiquement, et possiblement dans tous les modes de réalisation, la région de traitement non réciproque présente en outre une géométrie dont la largeur d'entrée et/ou la largeur moyenne sont sensiblement égales à la largeur de différentiation Wd, au moins dans la partie où les deux interfaces de traitement présentent une géométrie différente.

D'autres types d'agencements permettent de différentier le premier mode plasmonique et le deuxième mode plasmonique l'un de l'autre dans un signal, et peuvent aussi être utilisés dans l'invention pour réaliser une telle différentiation, et produire le signal optique différentié.

L'invention permet d'intégrer un composant optique non réciproque performant et compact dans un circuit photonique, par exemple un isolateur ou un circulateur, notamment planaire au sens large, avec un procédé technologique simple. Le circuit photonique peut être par exemple un simple laser, ou bien un circuit comprenant de nombreuses fonctions optiques guidées.

La solution proposée présente des avantages majeurs, en particulier :

- un tel composant peut être très compact (quelques microns à quelques dizaines de microns pour un fonctionnement dans le proche infrarouge), ce qui limite en outre les pertes induites ;
- la fonction optique est large bande (gamme spectrale de plusieurs dizaines de nanomètres), alors que les isolateurs performants actuellement proposés fonctionnent de manière résonante sur une fraction de nanomètre. La bande spectrale est ajustable pour un isolateur, et très large pour un circulateur ;
- dans certaines versions (FeCo-silice-FeCo par exemple), la structure est intégrable sur n'importe quelle plateforme photonique avec un procédé de fabrication standard et à peu d'étapes, et peut fonctionner avec une aimantation rémanente ;
- le taux d'isolation typique d'une structure de quelques microns de long atteint environ 10 dB, pour une bande large, et est « cascadable » (sommable). Avant même toute optimisation particulière, le compromis isolation/pertes est très élevé par rapport aux structures plasmoniques habituelles. L'invention permet par exemple un niveau de pertes totales de ~5dB pour un isolateur de 10dB. Ce niveau de pertes peut-être facilement compensé par amplification.

De préférence, mais non obligatoirement, la région de sélection est agencée pour que le premier mode plasmonique corresponde au mode de type LRSPP du signal d'entrée.

Selon une particularité préférée, l'âme de différentiation et/ou l'âme de traitement (et de préférence les deux) sont réalisées en un matériau diélectrique ; et leurs matériaux extérieurs sont réalisés en un ou plusieurs matériaux métalliques. On obtient ainsi une structure de type pouvant être appelé "fente", ou "slot" en Anglais, aussi appelée MIM (pour "Metal Insulator Metal", soit Metal Isolant Métal) ou MDM (pour "Metal Dielectric Metal", soit Métal Diélectrique Métal).

Alternativement, l'âme de différentiation et/ou l'âme de traitement (et de préférence les deux) sont réalisées en un matériau métallique ; et leurs matériaux extérieurs sont réalisés en un ou plusieurs matériaux diélectriques. On obtient ainsi une structure de pouvant être appelé "nervure", ou "rib" ou "wire" en Anglais, aussi appelée IMI (pour "Insulator Metal Insulator") ou DMD (pour "Dielectric Metal Dielectric").

Dans les deux cas, ces matériaux sont choisis pour réaliser entre eux une interface de guidage plasmonique mettant en oeuvre un effet magnéto-optique.

De préférence, mais non obligatoirement, les différentes âmes sont réalisées, en tout ou partie, en une couche plane ou bidimensionnelle incluse entre une couche inférieure et une couche supérieure, et en ce que les interfaces réalisant le guidage dans lesdites âmes forment des surfaces planes ou bidimensionnelles transverses auxdites couches. Les interfaces de guidage, en particulier celles qui sont magnéto-plasmoniques, forment ainsi des surfaces "verticales" à l'intérieur d'une même couche de fabrication du composant. Il est ainsi bien plus facile de réaliser les formes voulues pour ces interfaces, que s'il fallait réaliser des structurations géométriques entre deux couches superposées.

Il est à noter que les couches supérieures et/ou inférieures peuvent être constituées d'air ou de vide, formant ainsi un guidage découvert et/ou suspendu.

Traitement par absorption

Selon une première famille de modes de réalisation, la première interface de traitement présente une géométrie comprenant une ou plusieurs cavités d'absorption, par exemple de type Helmoltz et/ou Fabry-Perot.

Cette ou ces cavités sont par exemple d'une géométrie agencée pour absorber en tout ou partie un signal optique d'une fréquence déterminée. Il peut s'agir notamment de plusieurs cavités de mêmes dimensions, déterminées pour absorber une plus grande partie du signal.

Elles sont possiblement aussi agencées pour absorber en tout ou partie un signal optique comprenant une pluralité de fréquences différentes, notamment une pluralité de fréquences décalées entre elles de façon à ce que ladite interface de traitement absorbe tous les signaux au sein d'une plage de fréquence déterminée. Il peut alors s'agir de plusieurs cavités ou groupes de cavités de dimensions différentes, déterminées pour absorber une pluralité de longueurs d'ondes, et ainsi agir sur une plus large bande de fréquences.

La deuxième interface de traitement présente alors une géométrie qui est agencée pour laisser passer un signal optique de ladite ou lesdites fréquences déterminées.

On obtient ainsi un composant dont une ou plusieurs fréquences sont bloquées dans un sens, mais pas dans l'autre sens.

De préférence, les premier et deuxième guides ou ports optiques comprennent chacun une région de sélection et une région de différentiation, et sont reliés entre eux par au moins une première région de traitement, dont la première interface de traitement est agencée pour absorber en tout ou partie un signal optique d'une ou plusieurs fréquences déterminées, et dont la deuxième interface de traitement est agencée pour laisser passer ledit signal optique. La région de traitement du premier port optique peut alors être vue comme formant la région de traitement du deuxième port optique.

Les régions de sélection et de différentiation du deuxième port optique vont ainsi agir de la même façon sur un signal optique arrivant dans le sens inverse. Elles vont respectivement sélectionner le premier mode plasmonique puis le concentrer sur la première interface vue dans le deuxième sens, c'est-à-dire sur la deuxième interface vue dans le premier sens.

Ainsi, pour une fréquence ou plage de fréquence donnée, si l'une des interfaces de traitement est absorbante tandis que l'autre interface de traitement est passante, on obtient ainsi un isolateur optique qui est passant dans le deuxième sens (formant un sens aller) et qui est bloquant dans le premier sens (formant le sens retour de l'isolateur).

Un tel isolateur peut par exemple être intégré dans un circuit intégré incluant une source laser, de façon à laisser passer dans le sens aller le signal émis par le laser tout en bloquant les réflexions qui pourraient revenir dans le sens retour, par exemple afin de permettre un fonctionnement de puissance sans risque de perte de cohérence par retour optique. Des applications sont par exemple les télécoms, et en particulier l'intégration monolithique de lasers ou amplificateurs à semiconducteur dans des circuits photoniques.

Traitement par déviation

Selon une deuxième famille de modes de réalisation, la première interface de traitement du premier port optique présente une géométrie qui forme une déviation par rapport à la deuxième interface de traitement. Une telle déviation est par exemple agencée pour que la première interface de traitement aboutisse à un port optique différent, ou parcourre une distance différente, ou intègre un traitement supplémentaire ou différent.

Selon une particularité, la première interface de traitement du premier port optique présente une géométrie qui la raccorde avec le deuxième port optique de façon à guider un signal optique différentié provenant dudit premier port pour émettre un signal optique de sortie par ledit deuxième port. De son côté, la deuxième interface de traitement dudit premier port optique présente une géométrie qui la raccorde avec un troisième port optique, pour recevoir un signal optique différentié provenant dudit troisième port et l'émettre comme un signal optique de sortie par le premier port, réalisant ainsi un circulateur optique.

En appliquant la même configuration à chacun des ports optiques d'un composant, on obtient par exemple un circulateur qui dévie chaque signal d'entrée vers le port optique suivant, possiblement de manière circulaire si le dernier port optique dévie vers le premier port optique.

Il est ainsi possible de réaliser un circulateur optique intégré pour multiplier les fonctions sur un circuit photonique, par exemple pour des fonctions successives de capteur ou de biodétection, par exemple en association à un circuit microfluidique. La fonction circulateur intégré permet ainsi de démultiplier les fonctions d'un circuit sans ajouter d'encombrement.

Il est aussi possible d'obtenir un décalage de phase, en réalisant deux interfaces de traitement présentant des géométries différentes agencées pour leur donner des longueurs d'interface différentes.

Circuit intégré

Selon un autre aspect, l'invention propose un dispositif comprenant un ou plusieurs composants optiques non-réciproques tels qu'exposés ici, réalisés de façon intégrée au sein d'un circuit optique intégré.

Selon des particularités pouvant être combinées entre elles :

- ce circuit optique intégré inclut au moins un émetteur laser intégré, et en ce que qu'il comprend au moins un composant optique non-réciproque à absorption non réciproque tel qu'exposé ici, qui est connecté audit laser pour autoriser dans un sens le passage d'un signal optique émis par ledit laser tout en empêchant ou diminuant un retour de signal optique vers ledit laser dans le sens opposé.
- ce circuit optique intégré comprend une pluralité de capteurs réalisés ou connectés de façon intégrée, et au moins un composant optique non-réciproque à déviation ou de type circulateur tel qu'exposé ici, qui est connecté avec au moins deux desdits capteurs.

- ce circuit optique intégré comprend au moins un composant optique non-réciproque à déviation ou de type circulateur tel qu'exposé ici, qui est connecté ou agencé pour réaliser un interféromètre de Michelson de façon intégrée en tout ou partie, par exemple dans le domaine du traitement du signal.

Selon encore un autre aspect, l'invention propose un procédé de traitement d'un signal optique caractérisé en ce qu'il comprend un traitement dudit signal optique par traversée d'au moins un composant optique non-réciproque tel qu'exposé ici, ou au sein d'un dispositif tel qu'exposé ici.

Des modes de réalisation variés de l'invention sont prévus, intégrant selon l'ensemble de leurs combinaisons possibles les différentes caractéristiques optionnelles exposées ici.

**Brève description des dessins**

D'autres particularités et avantages de l'invention ressortiront de la description détaillée d'un mode de mise en oeuvre nullement limitatif, et des dessins annexés sur lesquels :

[Fig.1] : la Fig.1 est un schéma partiel en vue de dessus qui illustre différentes régions d'un port optique d'un composant selon l'invention ;
[Fig.2] : la Fig.2 est un schéma en vue de dessus qui illustre un composant de type isolateur selon un exemple de mode de réalisation de la première famille ;
[Fig.3] : les Fig.3a et b sont des schémas qui illustrent la région de traitement d'un composant de type isolateur : respectivement en perspective et en vue en coupe transversale au guide optique ;
[Fig.4] : la Fig.4 est un schéma en vue de dessus qui illustre un composant de type circulateur selon un exemple de mode de réalisation de la deuxième famille ;
[Fig.5] : la Fig.5 est un schéma en coupe transversale au guide optique, qui illustre un premier exemple d'agencement des matériaux d'un composant selon l'invention ;
[Fig.6] : la Fig.6 est un schéma en coupe transversale au guide optique, qui illustre un deuxième exemple d'agencement des matériaux d'un composant selon l'invention ;
[Fig.7] : la Fig.7 est un schéma en coupe transversale au guide optique, qui illustre un troisième exemple d'agencement des matériaux d'un composant selon l'invention ;
[Fig.8] : la Fig.8 est un schéma en coupe transversale au guide optique, qui illustre un quatrième exemple d'agencement des matériaux d'un composant selon l'invention.

**Description d'exemples de modes de réalisation**

L'invention concerne une nouvelle structure de composant magnéto-optique et plasmonique guidé à transmission non-réciproque.

Dans cet exemple la structure élémentaire est constituée d'un guide sub-longueur d'onde de type Métal-Diélectrique-Métal, appelé aussi Métal-Isolant-Métal (MIM), dont soit le diélectrique soit le métal présente des propriétés magnéto-optiques dans la gamme de fréquence considérée.

Cette structure permet de réaliser un isolateur ou un circulateur optique planaire, indépendant ou intégré sur circuit photonique, fonctionnant sur une large gamme spectrale.

Le phénomène qui induit la non-réciprocité ici est une utilisation spécialement adaptée d'un phénomène d'asymétrie de distribution spatiale des modes magnéto-plasmoniques du MIM, obtenue lorsque l'aimantation du matériau MO et la polarisation de l'onde propagée sont choisies de manière à générer l'effet TMOKE (aimantation parallèle au plan des couches et polarisation de l'onde perpendiculaire à ce plan et à l'aimantation). Néanmoins les deux modes pair et impair qui se propagent dans le MIM (dans cet exemple) présentent une asymétrie opposée. Pour cette raison, ils se compensent dans un signal classique puisqu'ils sont tous les deux excités en même temps.

Pour utiliser ce phénomène physique afin d'obtenir une transmission non-réciproque, le signal est traité pour qu'un seul des deux modes soit excité. Ce traitement de sélection est ici réalisé en sélectionnant à l'entrée du guide MIM, par un guide étroit ou évasé, un seul des modes plasmoniques : seulement le pair ou seulement l'impair. En effet, l'indice effectif du mode pair et du mode impair deviennent significativement différents pour des guides très étroits. Le mode choisi est alors sélectionné en utilisant une ouverture qui produit l'indice effectif correspondant au mode visé.

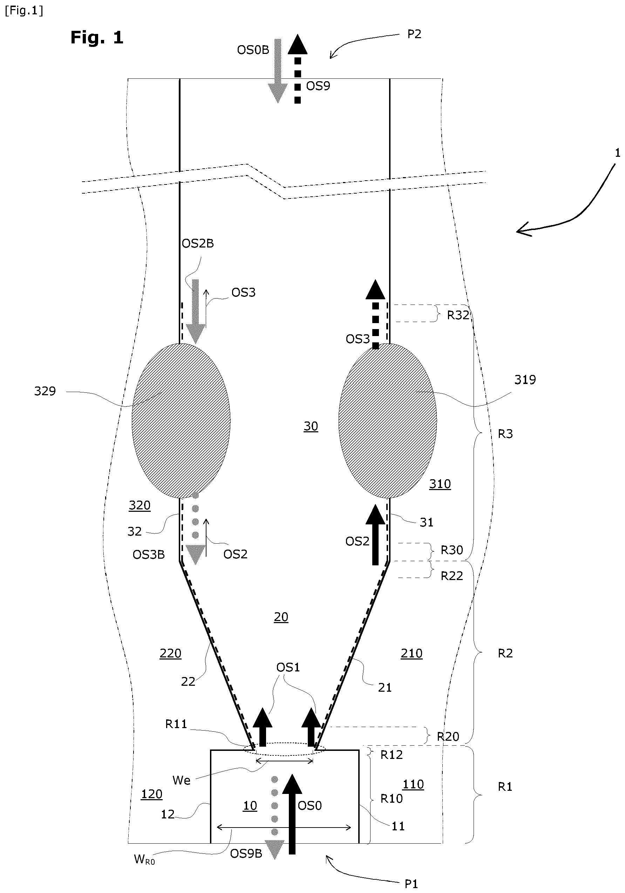

En Fig.1 est illustré un exemple de composant non-réciproque 1, sous une forme générique et en ne détaillant qu'un seul port optique P1.

Ce composant optique 1 comprend un premier port P1 et un deuxième port P2 communiquant entre eux de façon optique. Ces ports optiques forment ainsi une connexion dudit composant au sein d'un circuit optique guidé. Ce circuit peut être formé par des fibres optiques externes connectées aux ports optiques. Il peut aussi former un circuit intégré monolithique, ce qui permet une grande compacité. Au sein de ce circuit optique, ce composant 1 peut ainsi être traversé d'une part dans un premier sens par un signal optique d'entrée OS0 et d'autre part dans un deuxième sens, opposé au premier sens, par un signal optique d'entrée inverse OSOB.

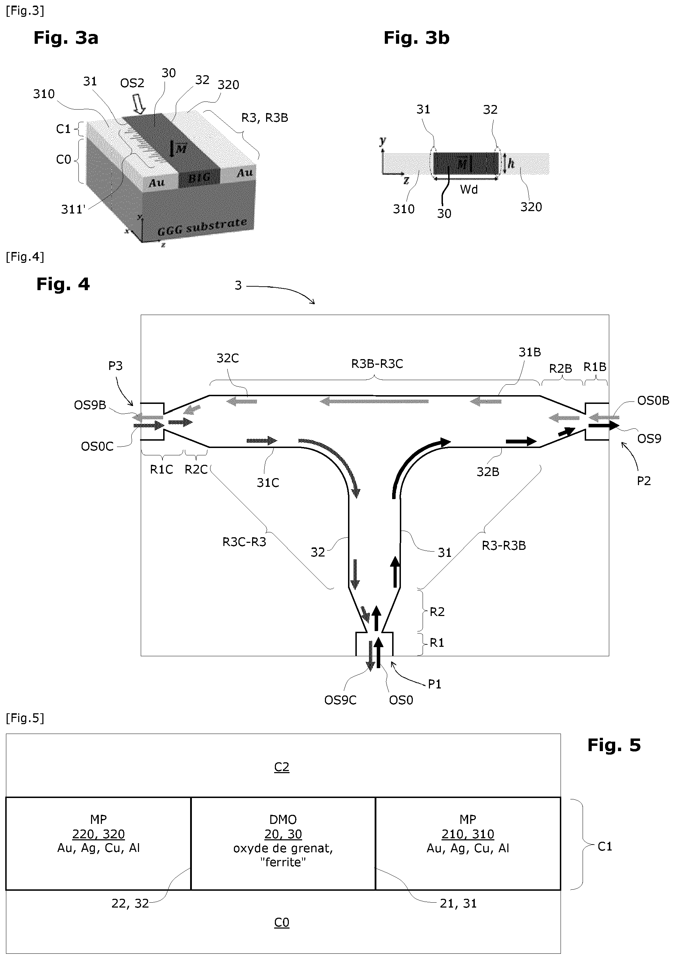

Dans cet exemple générique, il est supposé que les deux ports optiques P1 et P2 communiquent entre eux, de telle sorte que chaque signal d'entrée OS0 et OSOB ressort par le pôle opposé sous la forme d'un signal de sortie OS9 et OS9B. Mais ce composant peut tout à fait avoir plus de deux ports, qui communiquent entre eux de façon différente, par exemple comme illustré en Fig.4.

La communication optique entre les ports est réalisée par un matériau de guidage 10, 20, 30 formant un guide optique entre ses interfaces latérales avec des matériaux extérieurs, d'un côté 110, 210, 310 et de l'autre côté 120, 220, 320.

Comme on le voit, un signal optique d'entrée OS0 qui entre par le premier port P1 de ce composant 1 traverse successivement une pluralité de régions R1, R2, R3, incluant les régions suivantes dans cet ordre : une région de sélection R1, une région de différentiation R2, une région de traitement R3.

En arrivant par le premier port optique P1, le signal optique d'entrée OS0 pénètre dans une région de sélection (R1). Cette région de sélection est ici formée par une âme de sélection 10, qui guide le signal reçu entre l'interface latérale gauche 11 et l'interface latérale droite 12.

Cette région de sélection (R1) présente une partie d'entrée (R10) qui reçoit le signal d'entrée OS0. Elle forme un guidage qui présente, pour le signal reçu en entrée, une impédance optique d'entrée du mode guidé, par exemple un indice effectif d'entrée $z0_{eff}$. Cette partie d'entrée comporte ici un guidage uniquement optique, mais pourrait aussi fonctionner de façon magnéto-plasmonique. Le signal optique se propage ensuite jusqu'à une partie de sortie R12 formant un guidage magnéto-optique plasmonique, réalisé entre deux interfaces magnéto-plasmoniques.

La partie d'entrée R10 et la partie de sortie R12 communiquent entre elles par une ouverture de sélection (R11) qui présente une largeur de sélection We déterminée, typiquement plus étroite que la largeur d'entrée $W_{R0}$ (de cette région de sélection R1). Le signal optique d'entrée OS0 excite ainsi, à travers l'ouverture de sélection R11, un signal optique dit sélectionné OS1 qui se propage dans la partie de sortie R12 vers la région de différentiation R2. On peut ici considérer que cette partie de sortie R12 est confondue avec le début R20 de la région de différentiation R2.

Ce signal optique sélectionné OS1, qui se propage ainsi en un mode guidé magnéto-plasmonique, présente une énergie qui se répartit entre un premier mode plasmonique et un deuxième mode plasmonique.

L'un de ces premier et deuxième modes plasmoniques est le mode LR (ou LRSPP pour "Long Range Surface Polariton Plasmon"), de préférence le premier mode plasmonique. L'autre de ces premier et deuxième modes plasmoniques est le mode SR (ou SRSPP, pour "Short Range Surface Polariton Plasmon"), de préférence le deuxième mode plasmonique.

La largeur We de cette ouverture de sélection R11, combinée avec les autres caractéristiques de la partie de sortie R12 de la région de sélection R1, détermine pour le signal optique sélectionné OS1 une impédance optique de sélection $z1_{eff}$, par exemple sous la forme d'un indice effectif de sélection.

Ces caractéristiques, en particulier la largeur We, sont choisies pour produire une impédance optique de sélection $z1_{eff}$ pour laquelle :

   ◦ le premier mode plasmonique présente une première impédance optique du mode guidé z1eff, par exemple un premier indice effectif, qui est sensiblement égale à l'impédance optique d'entrée z0eff, et
   ◦ le deuxième mode plasmonique présente une deuxième impédance optique du mode guidé z2eff, par exemple sous la forme d'un deuxième indice effectif, qui est significativement différente de la première impédance optique z1eff.

On obtient ainsi que le signal d'entrée OS0 excite, dans la partie de sortie R12 et au travers de l'ouverture de sélection R11, un mode optique selon le seul premier mode plasmonique. C'est à dire à l'exclusion du deuxième mode plasmonique, ou avec une amplitude significativement plus importante que celle du deuxième mode plasmonique, typiquement un facteur 100 en intensité.

On obtient ainsi un signal optique sélectionné OS1 qui ne comporte sensiblement que le premier mode plasmonique.

Comme indiqué par les deux flèches noires épaisses, ce signal OS1 présente une énergie qui est répartie sur les deux interfaces de sélection 11, 12, bien que pas nécessairement de façon uniforme. En effet, pour les fréquences considérées, pour l'impédance optique de sélection $z1_{eff}$ (choisie pour que l'énergie se distribue très inégalement entre les deux modes plasmoniques pour permettre la sélection du premier mode), il y a en général très peu d'asymétrie spatiale entre les deux interfaces magnéto-plasmoniques.

La région de différentiation R2 reçoit en entrée R20 le signal optique sélectionné OS1 provenant de la région de sélection R1, et le guide jusqu'à sa partie de sortie R32 où il forme un signal optique dit différentié OS2.

Ce guidage se fait dans une âme de guidage dite âme de différentiation 20 qui s'étend entre deux interfaces latérales dites de différentiation 21, 22, situées sur les deux côtés opposés.

Ces interfaces de différentiation 21, 22 sont formées chacune entre un matériau d'âme et au moins un matériau extérieur (typiquement le même des deux côtés), dont l'un est diélectrique 20 et l'autre est métallique 210, 220, qui sont choisis et agencés pour réaliser entre elles un guidage magnéto-plasmonique. Dans cet exemple, il s'agit d'un effet TMOKE, obtenu en induisant une aimantation M, par exemple en le soumettant à un champ magnétique ou sous l'effet d'une aimantation rémanente.

Comme on le voit, la région de différentiation R2 présente une géométrie d'une largeur croissante depuis sa largeur d'entrée We jusqu'à une largeur de différentiation Wd. Cet élargissement est par exemple symétrique autour de l'âme de différentiation, et/ou continûment croissante et de préférence régulièrement croissante.

Cette largeur de différentiation Wd est choisie, en combinaison avec les autres caractéristiques de cette région de différentiation R2, pour que le premier mode plasmonique du signal optique sélectionné OS2 présente une grande asymétrie spatiale d'amplitude entre lesdites interfaces de différentiation, par exemple d'un facteur 100 d'une interface à l'autre.

Dans cet exemple, cette partie de sortie R22 est agencée pour que l'énergie du signal optique différentié OS2 soit concentrée sur l'interface de droite, c'est-à-dire l'interface de différentiation 21. Cette asymétrie est illustrée par les flèches représentant la répartition de l'énergie du signal différentié OS2 sur les interfaces de gauche et de droite : flèche épaisse sur l'interface de droite 21-31, et flèche en trait fin sur l'interface de gauche 22-32.

A ce stade, comme on le comprend, la région de sélection R11 a concentré l'énergie du signal optique d'entrée OS0 en un seul mode plasmonique, le premier ; puis l'énergie a été concentrée dans la région de différentiation R2 sur une seule interface latérale, ici la première interface de différentiation 21 située sur la droite de la figure.

La région de traitement non réciproque R3 reçoit en entrée R30 le signal différentié OS2 provenant de la région de différentiation R2, et le guide par une partie de traitement 31 jusqu'à une région de sortie R32 où il forme un signal optique dit traité OS3,

par une âme de guidage dite âme de traitement 30 s'étendant entre au moins une première interface de traitement 31 et une deuxième interface de traitement 32,

Dans cet exemple, la largeur de différentiation Wd est sensiblement égale à la largeur d'entrée de la région de traitement non réciproque R3 ; et/ou à la largeur moyenne de cette région de traitement non réciproque R3, par exemple dans sa partie où les deux interfaces de traitement 31, 32 présentent une géométrie différente l'une de l'autre.

Typiquement, on peut considérer que l'entrée R30 de la région de traitement R3 est confondue avec la sortie R22 de la région de différentiation R2.

La première interface de traitement 31 prolonge la première interface de différentiation, et la deuxième interface de traitement 32 prolonge la deuxième interface de différentiation 22.

Ces deux interfaces de traitement non réciproque 31, 32 sont formées chacune entre un matériau d'âme de traitement 30 et un matériau extérieur 310, 320, dont l'un est diélectrique et l'autre est métallique, ici les mêmes que pour la région de différentiation R2.

Elles sont agencées et déterminées pour réaliser entre elles un guidage magnéto-plasmonique. Dans cet exemple, l'agencement des matériaux et/ou de l'aimantation est le même que celui de la région de différentiation, en dehors de leur géométrie latérale.

En outre, elles sont agencées pour présenter, entre l'entrée R30 et la sortie R32 de ladite région de traitement R3, des géométries 319, 329 qui ne sont pas équivalentes l'une de l'autre.

Sur la figure, la première interface de traitement 31 passe ainsi par une région 319, illustrée par un ovale hachuré, dans laquelle elle présente une première géométrie de traitement. De façon similaire, la deuxième interface de traitement 32 passe ainsi par une région 329, illustrée par un ovale hachuré, dans laquelle elle présente une deuxième géométrie de traitement qui est déterminée pour produire un traitement différent de celui produit par la première géométrie de traitement.

De façon générale, ces deux géométries de traitement 319, 329 sont choisies et déterminée pour produire des effets différents sur le signal sur la globalité de leur longueur. Cette différence est de préférence obtenue par des géométries différentes au sein d'une même configuration de matériaux et/ou d'aimantation. Alternativement ou en combinaison, elle peut aussi être obtenue par des matériaux différents et/ou une aimantation différente.

Comme on le comprend sur la figure, cette partie de traitement non réciproque R3 fournissant ainsi en sortie, dans le premier sens, un signal optique traité OS3 dont l'amplitude a subi un premier traitement produit par la géométrie de la seule première interface de traitement 21. Le résultat de ce premier traitement est ici illustré sur l'interface de droite 31, en sortie de la première zone de traitement 319, par une flèche épaisse en pointillés carrés.

Sur la deuxième interface de traitement 32, sur la gauche de la figure, le signal initial OS0 ne comporte aucune énergie qui ait traversé la deuxième zone de traitement 329, ou seulement une partie très faible de son énergie comme illustré par la flèche en pointillés et trait fin.

Dans le deuxième sens, ou sens inverse, la figure illustre d'une façon générale le passage d'un signal d'entrée inverse OS0B, par exemple identique au signal d'entrée OS0, lorsqu'il entre en tant que signal inverse différentié OS2B puis traverse ces mêmes régions R3, R2, R1 dans le sens inverse, illustré par une flèche épaisse en gris, c'est-à-dire ici du haut vers le bas de la figure.

Dès lors qu'il présente une composante non nulle sur la deuxième interface de traitement 32, ce signal OS2B subira donc le deuxième traitement pour ressortir sous la forme d'un signal inverse traité OS3B, illustré ici par une flèche épaisse en pointillés ronds.

Si ce signal inverse OS2B a lui aussi été concentré sur l'interface située à sa propre droite, alors il ne subira que le deuxième traitement de la deuxième zone 329, et ressortira par le premier port optique P1 sous la forme d'un signal de sortie inverse OS9B ayant subi le seul deuxième traitement.

Comme on le comprend, ce composant 1 fournit ainsi en sortie un signal inverse de sortie OS9B ayant subi un traitement différent de celui subi par le signal traité OS9 voyageant dans le premier sens. Un signal d'entrée OS0 et une signal d'entrée inverse OSOB traversant le premier port optique P1 de ce composant 1 dans les deux sens opposés, mêmes s'ils sont identiques à l'entrée, ressortiront sous deux formes de sorties différentes OS9 et OS9B.

On notera que, si ce signal inverse OS2B n'a pas été concentré auparavant sur sa seule interface de droite, il pourra subir aussi le premier traitement dans la première zone de traitement 319. Cependant, son signal de sortie OS9B sera composé d'une énergie ayant subi le premier 319 et le deuxième 329 traitements. Il aura donc subi un traitement différent du signal d'entrée OS0 et ressortira OS9B sous une forme différente.

Exemple d'isolateur

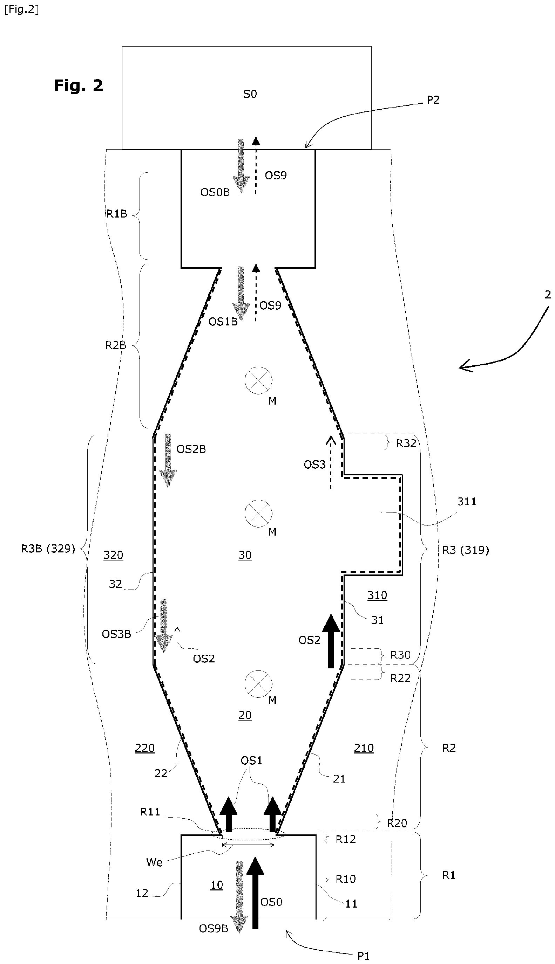

La Fig.2 illustre un exemple de mode de réalisation d'une première famille, appliqué à un composant 2 à deux ports communiquant uniquement entre eux.

Dans cet exemple, le deuxième port optique P2 comporte une région de sélection R1B et une région de différentiation R2B, de fonctionnalité similaire à celles R1 et R2 du premier port optique P1, et par exemple identiques.

Leurs régions de différentiation sont reliées entre elles par une région commune qui forme à la fois la région de traitement non-réciproque R3 du premier port P1 et la région de traitement non-réciproque R3B du deuxième port P2.

Au sein des modes de réalisation comprenant deux ports à sélection et différentiation couplés entre eux, cette figure illustre un exemple particulier dans lequel la région de traitement non-réciproque R3, R3B est agencée pour produire une absorption dans un sens 319 et une transmission dans le sens inverse 329.

Dans cet exemple schématique, la première interface de traitement 31 présente une cavité 311 qui est agencée pour absorber tout ou partie du signal OS2 qui lui parvient sur cette interface magnéto-plasmonique 31. Le signal traité OS3 qui en sort, et donc le signal de sortie OS9 est donc affaibli voire inexistant, réalisant un sens bloquant pour une entrée par le premier port P1.

Dans cet exemple schématique, la première interface de traitement 31 présente une géométrie comprenant une cavité d'absorption 311 qui est d'une géométrie agencée pour absorber en tout ou partie un signal optique OS2 d'une fréquence déterminée qui lui parvient sur cette interface magnéto-plasmonique 31. Le signal traité OS3 qui en sort, et donc le signal de sortie OS9 est donc affaibli voire inexistant, réalisant un sens bloquant pour une entrée par le premier port optique P1.

De son côté, la deuxième interface de traitement 32 présente une géométrie droite et régulière, qui est agencée pour laisser passer un signal optique d'entrée OSOB inverse qui est concentré OS2B sur cette deuxième interface 32 puisqu'elle est sur sa droite du point de vue de son sens de propagation. Le signal inverse traité OS3B est donc transmis inchangé, et ressort sous la forme d'un signal inverse de sortie OS9B sensiblement inchangé, ou au moins qui représente le signal inverse d'entrée OS0, réalisant ainsi un sens passant pour une entrée par le deuxième port optique P2.

La Fig.3a illustre un exemple similaire dans lequel la géométrie de la première interface de traitement 311' présente plusieurs cavités. Elle présente notamment plusieurs cavités de mêmes dimensions, pour absorber une plus grande partie du signal d'une fréquence déterminée. Dans cet exemple, la première interface de traitement 31 comporte en outre une pluralité de cavités d'absorption qui sont dimensionnées pour absorber en tout ou partie un signal optique comprenant une pluralité de fréquences différentes, notamment une pluralité de fréquences décalées entre elles de façon à ce que ladite interface de traitement absorbe tous les signaux au sein d'une plage de fréquence déterminée.

Chaque dimension correspondant à une fréquence déterminée (ou sous-plage de fréquence) au sein de cette plage, on obtient ainsi un traitement bloquant pour une bande plus large.

De telles cavités d'absorption 311, 311' sont, par exemple mais non exclusivement, de type Helmoltz ou Fabry-Perot ; uniformément ou de différents types.

De nombreuses combinaisons de cavités sont en outre possibles, par exemple plusieurs cavités identiques pour une absorption étroite mais profonde, et/ou plusieurs plages d'absorption distinctes et éloignées entre elles.

Dans les exemples des Fig.3a et Fig.3b, la deuxième interface de traitement 32 présente une géométrie qui est agencée pour laisser passer un signal optique des fréquences ou de la fréquence qui est absorbée par la première interface de traitement 31. Comme on le comprend, ce composant forme ainsi un isolateur optique pour tout signal optique situé dans la plage absorbée par la première interface 31.

Un tel isolateur peut par exemple isoler une source laser S0 connectée au deuxième port P2, pour l'injecter dans un circuit optique par le premier port P1. Cette source peut alors émettre dans le deuxième sens, qui constitue alors le sens passant ou "aller" de cet isolateur, tandis que les retours arrivant du circuit par le premier port P1 sont bloqués dans le premier sens ou sens "retour".

Dans d'autres exemples de modes de réalisation non détaillés ici, la deuxième interface de traitement peut présenter elle aussi des cavités d'absorption mais de caractéristiques différentes. Par exemple pour bloquer certaines fréquences dans un sens et bloquer d'autres fréquences dans l'autre sens.

Circulateur

La Fig.4 illustre un exemple de mode de réalisation d'une deuxième famille de modes de réalisation, appliqué à un composant à plus de deux ports communiquant entre eux.

Dans cette deuxième famille, une différence de traitement entre les deux interfaces de traitement 31, 32 d'une même région de traitement R3 est formée par le fait que ces deux interfaces produisent un traitement sous la forme d'une déviation, c'est à dire en particulier qu'elles ne conduisent pas au même endroit, notamment qu'elles ne conduisent pas au même port optique.

Dans un tel composant la première interface de traitement 31 du premier port optique P1 présente une géométrie qui forme une déviation par rapport à la deuxième interface de traitement 32, en particulier pour aboutir à un port optique P2 différent du port P3 atteint par cette deuxième interface de traitement 32, ou parcourir une distance différente ou intégrer un traitement supplémentaire ou différent.

Dans l'exemple de la Fig.4, trois ports optiques P1, P2 et P3 communiquent tous trois entre eux. Chaque port optique P1, P2, P3 comprend sa propre région de sélection R1, R1B, R1C, puis sa propre région de différentiation R2, R2B, R2C, à l'issue de laquelle sa région de traitement R3, R3B, R3C communique avec celle des ports voisins.

L'âme de guidage de chacun des trois ports se prolonge et communique avec celle de ses voisins, ici sous la forme d'un matériau continu formant une sorte d'étoile portant une branche pour chaque port. Chacune de ces branches forme l'âme de traitement non réciproque, et est entourée par ses deux interfaces de traitement. Pour chaque port optique, par exemple P1, la première interface de traitement 31 se prolonge sur le pourtour de l'âme pour devenir la deuxième interface de traitement 32B du port optique voisin d'un premier côté ; tandis que la deuxième interface de traitement 32 se prolonge sur le pourtour de l'âme pour devenir la première interface de traitement 31C du port optique voisin de l'autre côté, son deuxième côté.

Ainsi, chaque port optique qui reçoit un signal optique d'entrée va le conduire le long de sa première interface de traitement vers le port optique voisin du premier côté ; tandis qu'il pourra recevoir le long de sa deuxième interface de traitement un signal optique de sortie venant du port optique du deuxième côté. Comme on le comprend, on obtient ainsi un circulateur de signal optique, ici à circulation entre trois ports.

Ainsi, un premier signal OS0 entrant dans le premier port optique P1 est conduit par sa première interface de traitement 31 vers la deuxième interface 32B du deuxième port P2 pour en ressortir OS9.

De son côté, un deuxième signal OSOB entrant dans le deuxième port optique P2 est conduit par sa première interface de traitement 31B vers la deuxième interface 32C du troisième port P3 pour en ressortir OS9B.

Un troisième signal OS0C entrant dans le troisième port optique P3 est conduit par sa première interface de traitement 31C vers la deuxième interface 32 du premier port P1 pour en ressortir OS9C.

Cet exemple présente trois ports, mais doit être compris comme illustrant n'importe quel nombre de ports, y compris quatre, cinq, six, sept, huit, ou n'importe quelle valeur entière permise par la précision des procédés techniques de réalisation.

Dans d'autres exemples de modes de réalisation non détaillés ici, toutes ou certaines des interfaces de traitement combinent et/ou alternent plusieurs types de traitement, par exemple déviation et absorption.

Par exemple, il est possible de réaliser un composant où les signaux entrant par certains ports sont déviés tandis que d'autres sont absorbés ; et/ou dans lequel certaines fréquences sont absorbées tandis que les autres sont déviées.

L'exemple illustré ici porte sur une circulation que l'on peut qualifier de "complète", dans la mesure où chaque port communique avec un port en émission et avec un autre port en réception. Il est aussi prévu de réaliser une circulation incomplète, par exemple où certains ports forment un cul de sac en entrée, par exemple avec une première interface de traitement absorbante et une deuxième interface de traitement passante.

La communication optique interne au composant 1, 2, 3 est réalisée par guidage au sein d'une âme optique 10, 20, 30, formé par un matériau d'âme dans lequel le signal optique est guidé entre les interfaces entre cette âme et son environnement, lequel est réalisé en un ou plusieurs autres matériaux.

Dans les présents exemples, cette âme optique est réalisée par un matériau d'âme au sein une couche de propagation C1 plane, qui est incluse entre une couche inférieure C0 et une couche supérieure C2.

Le signal optique est confiné au sein de cette couche de propagation C1 par ses interfaces inférieure et supérieure, interfaces formées avec la couche inférieure et la couche supérieure. Typiquement, ces interfaces sont planes ou au moins bidimensionnelles, formant ainsi un guide planaire dont les interfaces inférieures et supérieures sont uniformes et/ou régulières.

Dans ces exemples, le confinement latéral à l'intérieur de la couche de propagation C1 se fait par les interfaces latérales qui forment des surfaces planes ou bidimensionnelles transverses aux différentes couches C0, C1, C2. A l'intérieur de la couche de propagation C1, ces interfaces latérales présentent une forme qui varie le long de la direction de propagation du signal.

La configuration d'un tel guide planaire à interfaces latérales est particulièrement avantageuse, en particulier parce qu'il est possible de leur donner facilement une forme quelconque possiblement très complexe, par exemple simplement par des moyens de photolithographie, lors de la fabrication de la couche de propagation.

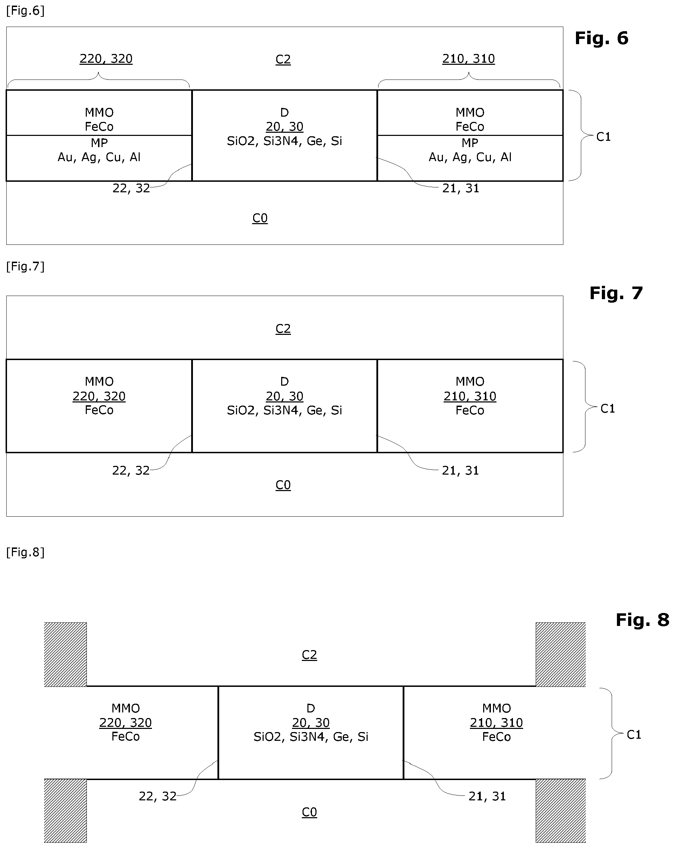

Dans les exemples illustrés en Fig.5 à Fig.7, les couches inférieures et supérieures sont des couches solides, l'une C0 est un substrat et l'autre est une couche de couverture. Dans l'exemple illustré en Fig.8, la couche de propagation C1 est suspendue entre deux couches inférieure et supérieure qui sont formées par l'air de l'environnement.

### Structure magnéto-plasmonique

Les Fig.5 à Fig.8 illustrent des exemples de structures magnéto-plasmoniques utilisables pour réaliser les interfaces magnéto-plasmoniques d'un composant selon l'invention, par exemple ceux des Fig.1, Fig.2 et Fig.4.

Dans les modes de réalisation actuellement préférés, en particulier ceux illustrés ici, les âmes de guidage magnéto-plasmoniques sont réalisées en un matériau diélectrique, ici pour l'âme de différentiation 20 et l'âme de traitement non réciproque 30. De leur côté, les matériaux extérieurs sont réalisés en un ou plusieurs matériaux métalliques. On obtient ainsi une structure de type pouvant être appelé "fente", ou "slot" en Anglais, aussi appelée MIM (pour "Metal Insulator Metal") ou MDM (pour "Metal Dielectric Metal").

Alternativement, de façon non illustrée ici dans ces coupes transversales, le composant peut aussi être réalisé en configuration de nervure, ou DMD, avec les mêmes types de matériaux.

La Fig.5 illustre un premier exemple d'agencement des matériaux, pour les interfaces 21, 22 de la région de différentiation R2 et les interfaces 31, 32 de la région de traitement non réciproque R3.

Dans cette configuration, le matériau extérieur 220, 320 et 210, 310 est un métal de type plasmonique ou un alliage métallique de type plasmonique, ici référencé "MP", en particulier choisi parmi l'or, l'argent, le cuivre, l'aluminium, et un mélange de deux, trois ou quatre de ces matériaux.

Le matériau de l'âme de guidage 20, 30 est un matériau diélectrique de type matériau magnéto-optique, ici référencé DMO, en particulier un oxyde de grenat ou un matériau diélectrique dopé en particules de ferrite, comme par exemple une silice minérale dopée en nanoparticules de ferrite de cobalt.

Les Fig.3a et Fig.3b illustrent, pour un exemple d'isolateur selon cette structure, la partie de traitement non-réciproque R3. L'âme de guidage 30, selon une direction de propagation parallèle à l'axe x, est en matériau diélectrique magnéto-optique, par exemple de type oxyde de grenat magnéto-optique. Il s'agit ici de Bismuth Iron Garnet ("BIG"), mais d'autres matériaux connus sont utilisables, tels que le Bi:YIG ou le Ce:YIG. Les matériaux extérieurs 310, 320 sont ici en or (Au), et réalisent ainsi des interfaces magnéto-plasmoniques 31, 32 sous l'effet d'une aimantation transverse "M" selon l'axe y. La première interface de traitement 31 présente une ou plusieurs cavités à pertes, s'étendant latéralement dans le matériau extérieur 310 selon l'axe z, formées sur une seule des parois du guide MIM. Ces cavités 311' sont de dimensions différentes, et en plusieurs exemplaires de chaque dimension. Les cavités peuvent avoir différentes géométries, par exemple rectangulaire, notamment de type Helmholtz.

La Fig.6 illustre un deuxième exemple d'agencement des matériaux, pour les interfaces 21, 22 de la région de différentiation R2 et les interfaces 31, 32 la région de traitement non réciproque R3.

Dans cette configuration, le matériau extérieur est une structure métallique formée par une superposition de couches de deux métaux différents MMO et MP.

Ces deux métaux sont alors :

- d'une part un métal de type plasmonique ou un alliage métallique de type plasmonique, ici référencé MP, en particulier choisi parmi l'or, l'argent, le cuivre, l'aluminium, et un mélange de deux, trois ou quatre de ces matériaux ; et
- d'autre part un métal de type magnéto-optique ici référencé MMO, en particulier un alliage de Fer-Cobalt.

Le matériau de l'âme 20, 30 est alors un diélectrique, typiquement qui n'est pas magnéto-optique et ici référencé "D", en particulier choisi parmi la silice, le nitrure de silicium, le germanium, le silicium, et un mélange de plusieurs de ces matériaux.

La Fig.7 illustre un troisième exemple d'agencement des matériaux, pour les interfaces 21, 22 de la région de différentiation R2 et les interfaces 31, 32 la région de traitement non réciproque R3.

Dans cette configuration, le matériau extérieur est un métal de type magnéto-optique, ici référencé MMO, en particulier un alliage de Fer-Cobalt.

Le matériau de l'âme 20, 30 est alors un diélectrique, typiquement qui n'est pas magnéto-optique et ici référencé "D", en particulier choisi parmi la silice, le nitrure de silicium, le germanium, le silicium, et un mélange de plusieurs de ces matériaux.

La Fig.8 illustre un quatrième exemple d'agencement des matériaux, ici sous la forme d'une variante de la configuration de la Fig.7. Dans cet exemple, la couche de propagation C1 est suspendue et découverte. C'est-à-dire que la couche inférieure C0 et respectivement la couche supérieure C2 sont formées par de l'air, ou toute autre atmosphère environnante. On notera que les caractéristiques d'une couche de propagation C1 suspendue et/ou découverte sont aussi applicables aux autres structures magnéto-plasmoniques.

Bien sûr, l'invention n'est pas limitée aux exemples qui viennent d'être décrits et de nombreux aménagements peuvent être apportés à ces exemples sans sortir du cadre de l'invention.

**Nomenclature**

| | |
|---|---|
| 1 | composant non réciproque |
| 2 | isolateur |
| 3 | circulateur |
| 10 | âme de sélection |
| 11, 12 | première et deuxième interfaces de sélection |
| 110, 120 | matériau extérieur des première et deuxième interfaces de sélection |
| 20 | âme de différentiation |
| 21, 22 | première et deuxième interfaces de différentiation |
| 210, 220 | matériau extérieur des première et deuxième interfaces de différentiation |
| 30 | âme de traitement non-réciproque |
| 31, 32 | première et deuxième interfaces de traitement non réciproque |
| 310, 320 | matériau extérieur des première et deuxième interfaces de traitement non réciproque |
| 311 | cavité d'absorption |
| 311' | groupe de cavités d'absorption |
| 319, 329 | géométrie de premier et deuxième traitement non réciproque |
| 31B, 32B | première et deuxième interfaces de traitement non réciproque (deuxième port optique) |
| 31C, 32C | première et deuxième interfaces de traitement non réciproque (troisième port optique) |
| C0 | couche inférieure |
| C1 | couche de propagation |
| C2 | couche de couverture |
| OS0 | premier signal optique d'entrée (retour) |
| OSOB | deuxième signal optique d'entrée (inverse, aller) |
| OS0C | troisième signal optique d'entrée |
| OS1 | premier signal optique sélectionné (retour) |
| OS2 | premier signal optique différentié (retour) |
| OS3 | premier signal optique traité (retour) |
| OS9 | premier signal optique de sortie (retour) |
| OS1B | deuxième signal optique sélectionné (inverse, aller) |
| OS2B | deuxième signal optique différentié |

(suite)

| OS3B | deuxième signal optique traité |
|------|-------------------------------|
| OS9B | deuxième signal optique de sortie |
| OS1C | troisième signal optique sélectionné |
| OS9C | troisième signal optique de sortie |
| P1 | premier port optique |
| P2 | deuxième port optique |
| P3 | troisième port optique |
| R1 | région de sélection |
| R10 | partie d'entrée (de la région de sélection) |
| R11 | ouverture de sélection (de la région de sélection) |
| R12 | partie de sélection (de la région de sélection) |
| R2 | région de différentiation |
| R20 | partie d'entrée (de la région de différentiation) |
| R22 | partie de sortie (de la région de différentiation) |
| R3 | région de traitement non réciproque |
| R30 | partie d'entrée (de la région de traitement) |
| R32 | partie de sortie (de la région de traitement) |
| R1B | région de sélection (deuxième port optique) |
| R1C | région de sélection (troisième port optique) |
| R2B | région de différentiation (deuxième port optique) |
| R2C | région de différentiation (troisième port optique) |
| R3B | région de traitement non réciproque (deuxième port optique) |
| R3C | région de traitement non réciproque (troisième port optique) |
| S0 | source laser |
| Wd | largeur de différentiation |
| We | largeur de sélection |
| $W_{R0}$ | largeur d'entrée de la région de sélection R1 |

**Revendications**

1. Composant optique (1, 2, 3) comprenant au moins un premier port (P1) ou guide optique et un deuxième port (P2) ou guide optique communiquant entre eux de façon optique non réciproque, lesquels connectent ou permettent de connecter ledit composant au sein d'un circuit optique guidé, de façon à pouvoir échanger un signal optique avec ledit circuit optique d'une part dans un premier sens et d'autre part dans un deuxième sens, qui est opposé au premier sens, au travers d'au moins une région à guidage magnéto-plasmonique
**caractérisé en ce que**

ledit composant comporte une pluralité de régions qui peuvent être parcourues successivement par un signal optique voyageant, dans le premier sens, depuis ledit premier port optique vers ledit deuxième port optique, lesdites régions comprenant au moins, dans cet ordre :

- une région de sélection (R1), agencée pour

∘ recevoir en entrée (R10) un signal optique d'entrée (OSO) s'y propageant selon une impédance optique d'entrée $z0_{eff}$ ; et

∘ émettre en sortie (R12), au moyen d'un guidage plasmonique, un signal optique dit sélectionné (OS1) comportant un premier mode plasmonique et un deuxième mode plasmonique, définis comme étant le mode LR pour l'un et le mode SR pour l'autre,

dans lequel le deuxième mode plasmonique présente une amplitude nulle, ou significativement plus faible que le premier mode plasmonique ;

- une région de différentiation (R2) agencée pour recevoir en entrée (R20) le signal optique sélectionné (OS1) provenant de la région de sélection (R1), et le guider jusqu'à une partie de sortie (R32) où il forme un signal optique dit différentié (OS2), par une âme de guidage dite âme de différentiation (20) s'étendant entre au moins deux interfaces dites de différentiation (21, 22), lesquelles interfaces de différentiation :

∘ sont formées entre un matériau d'âme et au moins un matériau extérieur, dont l'un est diélectrique et l'autre est métallique,

∘ sont situées sur deux côtés opposés, et

∘ sont déterminées pour réaliser entre elles un guidage magnéto-plasmonique avec effet magnéto-optique ;

ladite partie de sortie (R22) étant agencée pour présenter, entre lesdites interfaces de différentiation, une largeur de différentiation Wd choisie pour que le premier mode plasmonique du signal présente une asymétrie d'amplitude, entre lesdites interfaces de différentiation, supérieure à un seuil déterminé,

ladite région de différentiation fournissant ainsi en sortie un signal optique asymétrique, dit signal différentié (OS2), dont l'amplitude est concentrée sur la première interface de différentiation (21) ;

- une région de traitement non réciproque (R3), agencée pour recevoir en entrée (R30) le signal différentié (OS2) provenant de la région de différentiation (R2), et le guider par une partie de traitement (31) jusqu'à une région de sortie (R32) où il forme un signal optique dit traité (OS3),

par une âme de guidage dite âme de traitement (30) s'étendant entre au moins une première interface de traitement (31) et une deuxième interface de traitement (32),

lesquelles interfaces de traitement (31, 32) :

∘ sont formées chacune entre un matériau d'âme de traitement (30) et un matériau extérieur (310, 320), dont l'un est diélectrique et l'autre est métallique,

∘ sont situées sur les mêmes deux côtés opposés que les première et respectivement deuxième interfaces de différentiation (21, 22),

∘ sont déterminées pour réaliser entre elles un guidage magnéto-plasmonique, et

∘ sont agencées pour présenter, entre l'entrée (R30) et la sortie (R32) de ladite région de traitement (R3), des géométries (319, 329) qui ne sont pas équivalentes l'une de l'autre ;

ladite partie de traitement non réciproque (R3) fournissant ainsi en sortie, dans le premier sens, un signal optique traité (OS3) dont l'amplitude a subi un traitement produit par la géométrie de la seule première interface de traitement (21),

tandis qu'un signal dit inverse (OS2B), traversant ladite région de traitement (R3) dans le deuxième sens, subira un traitement produit par la géométrie de la seule deuxième interface de traitement (32) ou par l'ensemble des deux interfaces de traitements, fournissant ainsi un signal inverse traité (OS3BB) ayant subi un traitement différent de celui subi par le signal traité (OS3) voyageant dans le premier sens.

2. Composant selon la revendication précédente, **caractérisé en ce que**, la région de sélection (R1) présente :

- une partie d'entrée (R10) formant un guidage qui présente, pour le signal reçu en entrée, une impédance optique d'entrée $z0_{eff}$, et

- une partie de sortie (R12) formant un guidage magnéto-optique plasmonique entre deux interfaces magnéto-plasmoniques ;

lesquelles communiquent par une ouverture de sélection (R11) qui présente une largeur de sélection (We) ;

et **en ce que** les valeurs de l'impédance optique d'entrée z0eff et de la largeur de sélection (We) sont choisies pour que :

◦ le premier mode plasmonique présente une première impédance optique z1eff qui est sensiblement égale à l'impédance optique d'entrée z0eff, et

◦ le deuxième mode plasmonique présente une deuxième impédance optique z2eff qui est significativement différente de la première impédance optique z1eff ;

de sorte que le signal d'entrée (OSO) excite, dans la partie de sortie (R12) et au travers de l'ouverture de sélection (R11), un mode optique selon le premier mode plasmonique, à l'exclusion du deuxième mode plasmonique ou avec une amplitude significativement plus importante que celle du deuxième mode plasmonique, formant ainsi un signal optique sélectionné (OS1).

3. Composant selon la revendication précédente, **caractérisé en ce que**

la région de différentiation (R2) présente une géométrie d'une largeur croissante depuis sa largeur d'entrée (We) jusqu'à la largeur de différentiation Wd, et

la région de traitement non réciproque (R3) présente une géométrie dont la largeur d'entrée et/ou la largeur moyenne sont sensiblement égales à la largeur de différentiation Wd.

4. Composant selon l'une quelconque des revendications précédentes, **caractérisé en ce que** l'âme de différentiation (20) et/ou l'âme de traitement sont réalisées en un matériau diélectrique, et leurs matériaux extérieurs (210, 220, 310, 320) sont réalisés en un ou plusieurs matériaux métalliques,
et **en ce que** ces matériaux sont choisis pour réaliser entre eux une interface de guidage plasmonique mettant en oeuvre un effet magnéto-optique.

5. Composant selon l'une quelconque des revendications précédentes, **caractérisé en ce que** l'âme de différentiation (20) et/ou l'âme de traitement sont réalisées en un matériau métallique, et leurs matériaux extérieurs (210, 220, 310, 320) sont réalisés en un ou plusieurs matériaux diélectriques,
et **en ce que** ces matériaux sont choisis pour réaliser entre eux une interface de guidage plasmonique mettant en oeuvre un effet magnéto-optique.

6. Composant selon l'une quelconque des revendications précédentes, **caractérisé en ce que** les différentes âmes (10, 20, 30) sont réalisées, en tout ou partie, en une couche (C1) plane ou bidimensionnelle incluse entre une couche inférieure (C0) et une couche supérieure (C2), et **en ce que** les interfaces (21, 22, 31, 32) réalisant le guidage dans lesdites âmes forment des surfaces planes ou bidimensionnelles transverses auxdites couches (C0, C1, C2).

7. Composant selon l'une quelconque des revendications précédentes, **caractérisé en ce que** la région de sélection (R1) est agencée pour que le premier mode plasmonique corresponde au mode de type LRSPP du signal d'entrée (OS0).

8. Composant (1, 2) selon l'une quelconque des revendications précédentes, **caractérisé en ce que** la première interface de traitement (31) présente une géométrie comprenant une ou plusieurs cavités d'absorption (311) qui sont d'une géométrie agencée pour absorber en tout ou partie un signal optique d'une fréquence déterminée, tandis que la deuxième interface de traitement (32) présente une géométrie qui est agencée pour laisser passer un signal optique (OSOB) de ladite fréquence déterminée.

9. Composant selon la revendication précédente, **caractérisé en ce que** la première interface de traitement (31) comporte une pluralité de cavités d'absorption qui sont dimensionnées pour absorber en tout ou partie un signal optique comprenant une pluralité de fréquences différentes, notamment une pluralité de fréquences décalées entre elles de façon à ce que ladite interface de traitement absorbe tous les signaux au sein d'une plage de fréquence déterminée.
tandis que la deuxième interface de traitement (32) présente une géométrie qui est agencée pour laisser passer un signal optique d'une ou plusieurs fréquences au sein de ladite plage de fréquences déterminée.

10. Composant (2) selon l'une quelconque des revendications 8 à 9, **caractérisé en ce que** les premier et deuxième guides ou ports optiques (P1, P2) comprennent chacun une région de sélection (R1, R1B) et une région de différentiation (R2, R2B), et sont reliés entre eux par au moins une première région de traitement (R3), dont la première interface de traitement (31) est agencée pour absorber en tout ou partie un signal optique d'une ou plusieurs fréquences déterminées, et dont la deuxième interface de traitement (32) est agencée pour laisser passer ledit signal optique, réalisant ainsi un isolateur optique pour ledit signal optique.

11. Composant (3) selon l'une quelconque des revendications précédentes, **caractérisé en ce que** la première interface de traitement (31) du premier port optique (P1) présente une géométrie qui forme une déviation par rapport à la deuxième interface de traitement (32), en particulier pour aboutir à un port optique (P3) différent ou parcourir une distance différente ou intégrer un traitement supplémentaire ou différent.

12. Composant (3) selon la revendication précédente, **caractérisé en ce que** la première interface de traitement (31) du premier port optique (P1) présente une géométrie qui la raccorde avec le deuxième port optique (P2) de façon à guider un signal optique différentié (OSO) provenant dudit premier port (P1) pour émettre un signal optique de sortie (OS9) par ledit deuxième port (P2),
tandis que la deuxième interface de traitement (32) dudit premier port optique (P1) présente une géométrie qui la raccorde avec un troisième port optique (P3) différent du deuxième port (P2), pour recevoir un signal optique différentié (OS9C) provenant dudit troisième port (P3) et l'émettre comme un signal optique de sortie (OS9C) par le premier port (P1), réalisant ainsi un circulateur optique.

13. Composant (1, 2, 3) selon l'une quelconque des revendications précédentes, **caractérisé en ce qu'**il est agencé et déterminé pour traiter un signal optique d'une longueur d'onde inférieure à $50\mu m$, et en particulier inférieure à $20\mu m$ ou $10\mu m$, et plus particulièrement inférieure à $3\mu m$.

14. Composant (1, 2, 3) selon l'une quelconque des revendications précédentes, **caractérisé en ce que**, pour les interfaces (21, 22, 31, 32) de la région de différentiation (R2) et/ou la région de traitement (R3) :

   - le matériau métallique est un métal de type plasmonique ou un alliage métallique de type plasmonique, en particulier choisi parmi l'or, l'argent, le cuivre, l'aluminium, et un mélange de deux, trois ou quatre de ces matériaux, et
   - le matériau diélectrique est un matériau magnéto-optique, en particulier un oxyde de grenat ou un matériau diélectrique dopé en particules de ferrite, comme par exemple une silice minérale dopée en nanoparticules de ferrite de cobalt.

15. Composant (1, 2, 3) selon l'une quelconque des revendications 1 à 13, **caractérisé en ce que**, pour les interfaces (21, 22, 31, 32) de la région de différentiation (R2) et/ou la région de traitement (R3), le matériau métallique est une superposition de couches ou un mélange d'au moins :

   - d'une part un métal de type plasmonique ou un alliage métallique de type plasmonique, en particulier choisi parmi l'or, l'argent, le cuivre, l'aluminium, et un mélange de deux, trois ou quatre de ces matériaux, et
   - d'autre part un métal de type magnéto-optique, en particulier un alliage de Fer-Cobalt.

16. Composant (1 2, 3) selon l'une quelconque des revendications 1 à 13, **caractérisé en ce que**, pour les interfaces (21, 22, 31, 32) de la région de différentiation (R2) et/ou la région de traitement (R3) :

   - le matériau métallique est un métal de type magnéto-optique, en particulier un alliage de Fer-Cobalt, et
   - le matériau diélectrique est un diélectrique qui n'est pas magnéto-optique, en particulier choisi parmi la silice, le nitrure de silicium, le germanium, le silicium, et un mélange de plusieurs de ces matériaux

17. Dispositif comprenant un ou plusieurs composants optiques non-réciproques (1, 2, 3) selon l'une quelconque des revendications précédentes, réalisés de façon intégrée au sein d'un circuit optique intégré.

18. Dispositif selon la revendication précédente, **caractérisé en ce que** le circuit optique intégré inclut au moins un émetteur laser intégré, et **en ce que** qu'il comprend au moins un composant optique non-réciproque (1, 2) selon l'une quelconque des revendications 8 à 10 qui est connecté audit laser pour autoriser dans un sens le passage d'un signal optique émis par ledit laser tout en empêchant ou diminuant un retour de signal optique vers ledit laser dans le sens opposé.

19. Dispositif selon l'une quelconque des revendications 17 à 18, **caractérisé en ce que** le circuit optique intégré comprend une pluralité de capteurs réalisés ou connectés de façon intégrée, et **en ce qu'**il comprend au moins un composant optique non-réciproque (3) selon la revendication 12 qui est connecté avec au moins deux desdits capteurs.

**20.** Dispositif selon l'une quelconque des revendications 17 à 18, **caractérisé en ce que** le circuit optique intégré comprend au moins un composant optique non-réciproque (3) selon la revendication 12 qui est connecté pour réaliser un interféromètre de Michelson de façon intégrée en tout ou partie.

**21.** Procédé de traitement d'un signal optique **caractérisé en ce qu'**il comprend un traitement dudit signal optique par traversée d'au moins un composant optique non-réciproque (1, 2, 3) selon l'une quelconque des revendications 1 à 16, ou au sein d'un dispositif selon l'une quelconque des revendications 17 à 20.

**Patentansprüche**

**1.** Optische Komponente (1, 2, 3) umfassend mindestens einen ersten optischen Port (P1) oder optischen Leiter und einen zweiten optischen Port (P2) oder optischen Leiter, welche auf nicht-reziproke optische Weise miteinander kommunizieren, welche die Komponente in einer geführten optischen Schaltung anschließen oder deren Anschluss ermöglichen, so dass ein optisches Signal mit der optischen Schaltung einerseits in einer ersten Richtung und andererseits in einer der ersten Richtung entgegengesetzten zweiten Richtung durch mindestens einen Bereich mit magnetoplasmonischer Führung hindurch ausgetauscht werden kann,
**dadurch gekennzeichnet, dass**

die Komponente eine Mehrzahl von Bereichen aufweist, die nacheinander von einem optischen Signal durchlaufen werden können, das in der ersten Richtung von dem ersten optischen Port zu dem zweiten optischen Port läuft, wobei diese Bereiche mindestens, in dieser Reihenfolge, umfassen:

- einen Auswahlbereich (R1), der dazu eingerichtet ist, um

    ◦ am Eingang (R10) ein optisches Eingangssignal (OSO) zu empfangen, das sich dort entsprechend einer optischen Eingangsimpedanz $z0_{eff}$ ausbreitet; und
    ◦ am Ausgang (R12) mittels einer plasmonischen Führung ein als ausgewählt bezeichnetes optisches Signal (OS1) zu emittieren, das eine erste plasmonische Mode und eine zweite plasmonische Mode umfasst, die einerseits als die LR-Mode und andererseits als die SR-Mode definiert sind,

    wobei die zweite plasmonische Mode eine Amplitude von Null oder deutlich kleiner als die der ersten plasmonischen Mode aufweist;
- einen Differenzierungsbereich (R2), der dazu eingerichtet ist, um am Eingang (R20) das ausgewählte optische Signal (OS1) zu empfangen, das aus dem Auswahlbereich (R1) stammt, und es bis zu einem Ausgangsabschnitt (R32) zu führen, wo es ein als differenziert bezeichnetes optisches Signal (OS2) bildet, durch einen als Differenzierungskern bezeichneten Führungskern (20), der sich zwischen mindestens zwei als Differenzierungsgrenzflächen bezeichneten Grenzflächen (21, 22) erstreckt,

    wobei diese Differenzierungsgrenzflächen:

    ◦ zwischen einem Kernmaterial und mindestens einem Außenmaterial gebildet sind, von denen eines dielektrisch und das andere metallisch ist,
    o sich auf zwei gegenüberliegenden Seiten befinden, und
    ◦ so bestimmt sind, dass sie zwischen sich eine magnetoplasmonische Führung mit magnetooptischem Effekt realisieren;

    wobei der Ausgangsabschnitt (R22) dazu eingerichtet ist, um zwischen den Differenzierungsgrenzflächen eine Differenzierungsweite Wd aufzuweisen, die so gewählt ist, dass die erste plasmonische Mode des Signals zwischen den Differenzierungsgrenzflächen eine Amplitudenasymmetrie aufweist, die größer als ein bestimmter Schwellenwert ist,
    wobei der Differenzierungsbereich somit am Ausgang ein als differenziertes Signal (OS2) bezeichnetes asymmetrisches optisches Signal bereitstellt, dessen Amplitude auf die erste Differenzierungsgrenzfläche (21) konzentriert ist;

    - einen nicht-reziproken Verarbeitungsbereich (R3), der dazu eingerichtet ist, um am Eingang (R30) das differenzierte Signal (OS2) zu empfangen, das vom Differenzierungsbereich (R2) stammt, und es durch einen Verarbeitungsabschnitt (31) bis zu einem Ausgangsbereich (R32) zu führen, wo es ein als verarbeitet bezeichnetes optisches Signal (OS3) bildet,

durch einen als Verarbeitungskern bezeichneten Führungskern (30), der sich zwischen mindestens einer ersten Verarbeitungsgrenzfläche (31) und einer zweiten Verarbeitungsgrenzfläche (32) erstreckt, wobei diese Verarbeitungsgrenzflächen (31, 32):

◦ jeweils zwischen einem Material des Verarbeitungskerns (30) und einem Außenmaterial (310, 320) gebildet sind, von denen eines dielektrisch und das andere metallisch ist,
o sich auf den gleichen zwei gegenüberliegenden Seiten wie die erste bzw. zweite Differenzierungsgrenzfläche (21, 22) befinden,
o so bestimmt sind, dass sie zwischen sich eine magnetoplasmonische Führung realisieren, und
◦ dazu eingerichtet sind, um zwischen dem Eingang (R30) und dem Ausgang (R32) des Verarbeitungsbereichs (R3) Geometrien (319, 329) aufzuweisen, die nicht zueinander äquivalent sind;

wobei der nicht-reziproke Verarbeitungsabschnitt (R3) somit am Ausgang in der ersten Richtung ein verarbeitetes optisches Signal (OS3) bereitstellt, dessen Amplitude einer Verarbeitung unterzogen wurde, die durch die Geometrie lediglich der ersten Verarbeitungsgrenzfläche (21) hervorgerufen wurde,
wobei ein als umgekehrt bezeichnetes Signal (OS2B), das den Verarbeitungsbereich (R3) in der zweiten Richtung durchläuft, einer Verarbeitung unterzogen wird, die durch die Geometrie lediglich der zweiten Verarbeitungsgrenzfläche (32) oder durch die Gesamtheit der beiden Verarbeitungsgenzflächen hervorgerufen wird, wodurch ein verarbeitetes umgekehrtes Signal (OS3BB) bereitgestellt wird, das einer anderen Verarbeitung unterzogen wurde als das in der ersten Richtung laufende verarbeitete Signal (OS3).

2. Komponente nach dem vorhergehenden Anspruch, **dadurch gekennzeichnet, dass** der Auswahlbereich (R1) aufweist:

- einen Eingangsabschnitt (R10), der eine Führung bildet, die für das am Eingang empfangene Signal eine optische Eingangsimpedanz $z0_{eff}$ aufweist, und
- einen Ausgangsabschnitt (R12), der eine magnetooptische plasmonische Führung zwischen zwei magnetoplasmonischen Grenzflächen bildet;
welche über eine Auswahlöffnung (R11) kommunizieren, die eine Auswahlweite (We) aufweist;
und dadurch, dass die Werte der optischen Eingangsimpedanz z0eff und der Auswahlweite (We) so gewählt sind, dass:

◦ die erste plasmonische Mode eine erste optische Impedanz z1eff aufweist, die im Wesentlichen gleich der optischen Eingangsimpedanz z0eff ist, und
◦ die zweite plasmonische Mode eine zweite optische Impedanz z2eff aufweist, die sich deutlich von der ersten optischen Impedanz z1eff unterscheidet;

so dass das Eingangssignal (OSO) im Ausgangsabschnitt (R12) und durch die Auswahlöffnung (R11) hindurch eine optische Mode entsprechend der ersten plasmonischen Mode anregt, unter Ausschluss der zweiten plasmonischen Mode oder mit einer Amplitude, die deutlich größer ist als die der zweiten plasmonischen Mode, wodurch ein ausgewähltes optisches Signal (OS1) gebildet wird.

3. Komponente nach dem vorhergehenden Anspruch, **dadurch gekennzeichnet, dass**

der Differenzierungsbereich (R2) eine Geometrie mit einer zunehmenden Weite von seiner Eingangsweite (We) bis zur Differenzierungsweite Wd aufweist, und
der nicht-reziproke Verarbeitungsbereich (R3) eine Geometrie aufweist, deren Eingangsweite und/oder mittlere Weite im Wesentlichen gleich der Differenzierungsweite Wd ist.

4. Komponente nach einem der vorhergehenden Ansprüche, **dadurch gekennzeichnet, dass** der Differenzierungskern (20) und/oder der Verarbeitungskern aus einem dielektrischen Material gebildet sind und ihre äußeren Materialien (210, 220, 310, 320) aus einem oder mehreren metallischen Materialien gebildet sind,
und dass diese Materialien so gewählt sind, dass zwischen ihnen eine plasmonische Führungsgrenzfläche gebildet wird, die einen magnetooptischen Effekt zum Einsatz bringt.

5. Komponente nach einem der vorhergehenden Ansprüche, **dadurch gekennzeichnet, dass** der Differenzierungskern (20) und/oder der Verarbeitungskern aus einem metallischen Material gebildet sind und ihre äußeren Materialien (210, 220, 310, 320) aus einem oder mehreren dielektrischen Materialien gebildet sind,

und dass diese Materialien so gewählt sind, dass zwischen ihnen eine plasmonische Führungsgrenzfläche gebildet wird, die einen magnetooptischen Effekt zum Einsatz bringt.

6. Komponente nach einem der vorhergehenden Ansprüche, **dadurch gekennzeichnet, dass** die verschiedenen Kerne (10, 20, 30) ganz oder teilweise aus einer ebenen oder zweidimensionalen Schicht (C1) gebildet sind, die zwischen einer unteren Schicht (C0) und einer oberen Schicht (C2) eingeschlossen ist, und dass die Grenzflächen (21, 22, 31, 32), die die Führung in den Kernen realisieren, ebene oder zweidimensionale Flächen bilden, die quer zu den Schichten (C0, C1, C2) verlaufen.

7. Komponente nach einem der vorhergehenden Ansprüche, **dadurch gekennzeichnet, dass** der Auswahlbereich (R1) dazu eingerichtet ist, dass die erste plasmonische Mode der LRSPP-Typ-Mode des Eingangssignals (OSO) entspricht.

8. Komponente (1, 2) nach einem der vorhergehenden Ansprüche, **dadurch gekennzeichnet, dass** die erste Verarbeitungsgrenzfläche (31) eine Geometrie mit einer oder mehreren Absorptionskavitäten (311) aufweist, die eine Geometrie aufweisen, die dazu eingerichtet ist, ein optisches Signal einer bestimmten Frequenz ganz oder teilweise zu absorbieren,

wobei die zweite Verarbeitungsgrenzfläche (32) eine Geometrie aufweist, die dazu eingerichtet ist, ein optisches Signal (OSOB) der genannten bestimmten Frequenz passieren zu lassen.

9. Komponente nach dem vorhergehenden Anspruch, **dadurch gekennzeichnet, dass** die erste Verarbeitungsgrenzfläche (31) eine Mehrzahl von Absorptionskavitäten aufweist, die so dimensioniert sind, dass sie ein optisches Signal mit einer Mehrzahl von unterschiedlichen Frequenzen, insbesondere einer Mehrzahl von Frequenzen, die zueinander gestaffelt sind, ganz oder teilweise absorbieren, so dass die Verarbeitungsgrenzfläche alle Signale innerhalb eines bestimmten Frequenzbereichs absorbiert,

wobei die zweite Verarbeitungsgrenzfläche (32) eine Geometrie aufweist, die dazu eingerichtet ist, ein optisches Signal mit einer oder mehreren Frequenzen innerhalb des bestimmten Frequenzbereichs passieren zu lassen.

10. Komponente (2) nach einem der Ansprüche 8 bis 9, **dadurch gekennzeichnet, dass** die ersten und zweiten optischen Leiter oder optischen Ports (P1, P2) jeweils einen Auswahlbereich (R1, R1B) und einen Differenzierungsbereich (R2, R2B) umfassen und über mindestens einen ersten Verarbeitungsbereich (R3) miteinander verbunden sind, dessen erste Verarbeitungsgrenzfläche (31) dazu eingerichtet ist, ein optisches Signal mit einer oder mehreren bestimmten Frequenzen ganz oder teilweise zu absorbieren, und dessen zweite Verarbeitungsgrenzfläche (32) dazu eingerichtet ist, das optische Signal passieren zu lassen, wodurch ein optischer Isolator für das optische Signal realisiert ist.

11. Komponente (3) nach einem der vorhergehenden Ansprüche, **dadurch gekennzeichnet, dass** die erste Verarbeitungsgrenzfläche (31) des ersten optischen Ports (P1) eine Geometrie aufweist, die eine Abweichung bezüglich der zweiten Verarbeitungsgrenzfläche (32) darstellt, insbesondere um zu einem anderen optischen Port (P3) zu führen oder eine andere Strecke zurückzulegen oder eine zusätzliche oder andere Verarbeitung zu integrieren.

12. Komponente (3) nach dem vorhergehenden Anspruch, **dadurch gekennzeichnet, dass** die erste Verarbeitungsgrenzfläche (31) des ersten optischen Ports (P1) eine Geometrie aufweist, die sie mit dem zweiten optischen Port (P2) derart verbindet, dass sie ein differenziertes optisches Signal (OSO) aus dem ersten Port (P1) führt, um ein optisches Ausgangssignal (OS9) durch den zweiten Port (P2) zu emittieren,

wobei die zweite Verarbeitungsgrenzfläche (32) des ersten optischen Ports (P1) eine Geometrie aufweist, die sie mit einem vom zweiten Port (P2) verschiedenen dritten optischen Port (P3) verbindet, um ein differenziertes optisches Signal (OS9C) von dem dritten Port (P3) zu empfangen und es als ein optisches Ausgangssignal (OS9C) durch den ersten Port (P1) zu emittieren, wodurch ein optischer Zirkulator realisiert ist.

13. Komponente (1, 2, 3) nach einem der vorhergehenden Ansprüche, **dadurch gekennzeichnet, dass** diese dazu eingerichtet und bestimmt ist, ein optisches Signal mit einer Wellenlänge von weniger als 50 $\mu$m und insbesondere weniger als 20 $\mu$m oder 10 $\mu$m, und besonders bevorzugt weniger als 3 $\mu$m, zu verarbeiten.

14. Komponente (1, 2, 3) nach einem der vorhergehenden Ansprüche, **dadurch gekennzeichnet, dass** für die Grenzflächen (21, 22, 31, 32) des Differenzierungsbereichs (R2) und/oder des Verarbeitungsbereichs (R3):

- das metallische Material ein Metall vom plasmonischen Typ oder eine Metalllegierung vom plasmonischen Typ ist, insbesondere ausgewählt aus Gold, Silber, Kupfer, Aluminium und einer Mischung aus zwei, drei oder vier dieser Materialien, und
- das dielektrische Material ein magnetooptisches Material ist, insbesondere ein Granatoxid oder ein mit Ferritpartikeln dotiertes dielektrisches Material, wie z. B. mit Kobaltferrit-Nanopartikeln dotiertes mineralisches Siliziumdioxid.

15. Komponente (1, 2, 3) nach einem der Ansprüche 1 bis 13, **dadurch gekennzeichnet, dass** für die Grenzflächen (21, 22, 31, 32) des Differenzierungsbereichs (R2) und/oder des Verarbeitungsbereichs (R3) das metallische Material eine Überlagerung von Schichten ist, oder eine Mischung aus zumindest:

- einerseits einem Metall vom plasmonischen Typ oder einer Metalllegierung vom plasmonischen Typ, insbesondere ausgewählt aus Gold, Silber, Kupfer, Aluminium, und einer Mischung aus zwei, drei oder vier dieser Materialien, und
- andererseits einem Metall vom magnetooptischen Typ, insbesondere einer Eisen-Kobalt-Legierung.

16. Komponente (1, 2, 3) nach einem der Ansprüche 1 bis 13, **dadurch gekennzeichnet, dass** für die Grenzflächen (21, 22, 31, 32) des Differenzierungsbereichs (R2) und/oder des Verarbeitungsbereichs (R3):

- das metallische Material ein Metall vom magnetooptischen Typ ist, insbesondere eine Eisen-Kobalt-Legierung, und
- das dielektrische Material ein Dielektrikum ist, das nicht magnetooptisch ist, insbesondere ausgewählt aus Siliziumdioxid, Siliziumnitrid, Germanium, Silizium und einer Mischung aus mehreren dieser Materialien

17. Vorrichtung umfassend eine oder mehrere nicht-reziproke optische Komponenten (1, 2, 3) nach einem der vorhergehenden Ansprüche, die in einer integrierten optischen Schaltung integriert ausgebildet sind.

18. Vorrichtung nach dem vorhergehenden Anspruch, **dadurch gekennzeichnet, dass** die integrierte optische Schaltung mindestens einen integrierten Lasersender aufweist, und dass diese mindestens eine nicht-reziproke optische Komponente (1, 2) nach einem der Ansprüche 8 bis 10 aufweist, die an diesen Laser angeschlossen ist, um in einer Richtung die Passage eines von diesem Laser emittierten optischen Signals zuzulassen, während sie in der entgegengesetzten Richtung eine Rückleitung des optischen Signals zum Laser hin verhindert oder vermindert.

19. Vorrichtung nach einem der Ansprüche 17 bis 18, **dadurch gekennzeichnet, dass** die integrierte optische Schaltung eine Mehrzahl von Sensoren umfasst, die integriert ausgebildet oder angeschlossen sind, und dass diese mindestens eine nicht-reziproke optische Komponente (3) nach Anspruch 12 umfasst, die mit mindestens zwei der Sensoren verbunden ist.

20. Vorrichtung nach einem der Ansprüche 17 bis 18, **dadurch gekennzeichnet, dass** die integrierte optische Schaltung mindestens eine nicht-reziproke optische Komponente (3) nach Anspruch 12 umfasst, die so angeschlossen ist, dass ein ganz oder teilweise integriertes Michelson-Interferometer realisiert ist.

21. Verfahren zur Verarbeitung eines optischen Signals, **dadurch gekennzeichnet, dass** es eine Verarbeitung des optischen Signals durch Durchlaufen von mindestens einer nicht-reziproken optischen Komponente (1, 2, 3) nach einem der Ansprüche 1 bis 16, oder in einer Vorrichtung nach einem der Ansprüche 17 bis 20, umfasst.

**Claims**

1. Optical component (1, 2, 3) comprising at least one first port (P1) or optical guide, and a second port (P2) or optical guide, communicating between each other in non-reciprocal optical fashion, which connect said component or allow the connection thereof within a guided optical circuit, so as to be able to exchange an optical signal with said optical circuit on the one hand in a first direction and on the other hand in a second direction, which is opposite to the first direction, through at least one magneto-plasmonic guidance region
**characterized in that**

said component includes a plurality of regions that can be passed through successively by an optical signal travelling, in the first direction, from said first optical port towards said second optical port, said regions comprising at least, in this order:

- a selection region (R1) arranged to

  ∘ receive at input (R10) an input optical signal (OSO) propagating there according to an input optical impedance $z0_{eff}$; and
  ∘ emit at output (R12), by means of plasmon guidance, an optical signal called selected optical signal (OS1), including a first plasmon mode and a second plasmon mode, defined as being the LR mode for one and the SR mode for the other,

  in which the second plasmon mode has an amplitude that is zero, or significantly lower than the first plasmon mode;
- a differentiation region (R2) arranged to receive at input (R20) the selected optical signal (OS1) originating from the selection region (R1), and guide it to an output part (R32) where it forms an optical signal called differentiated optical signal (OS2), by a guidance core called differentiation core (20) extending between at least two interfaces, called differentiation interfaces (21, 22), which differentiation interfaces:

  ∘ are formed between a core material and at least one outer material, of which one is dielectric and the other is metallic,
  ∘ are situated on two opposite sides, and
  ∘ are determined to produce between them a magneto-plasmonic guidance with magneto-optical effect;

said output part (R22) being arranged to have, between said differentiation interfaces, a differentiation width Wd chosen so that the first plasmon mode of the signal has an amplitude asymmetry, between said differentiation interfaces, greater than a determined threshold,
said differentiation region thus providing at output an asymmetrical optical signal, called differentiated signal (OS2), the amplitude of which is concentrated on the first differentiation interface (21);

- a non-reciprocal treatment region (R3) arranged to receive at input (R30) the differentiated signal (OS2) originating from the differentiation region (R2), and guide it via a treatment part (31) to an output region (R32) where it forms an optical signal called treated optical signal (OS3),

via a guidance core, called treatment core (30), extending between at least one first treatment interface (31) and a second treatment interface (32),
which treatment interfaces (31, 32):

  ∘ are each formed between a treatment core material (30) and an outer material (310, 320), of which one is dielectric and the other is metallic,
  ∘ are situated on the same two opposite sides as the first and respectively second differentiation interfaces (21, 22),
  ∘ are determined to produce between them a magneto-plasmonic guidance, and
  ∘ are arranged to have, between the input (R30) and the output (R32) of said treatment region (R3), geometries (319, 329) that are not equivalent to each other;

said non-reciprocal treatment part (R3) thus providing at output, in the first direction, a treated optical signal (OS3) the amplitude of which has undergone a treatment produced by the geometry of the first treatment interface (21) alone,
while a signal called reverse signal (OS2B), passing through said treatment region (R3) in the second direction, will undergo a treatment produced by the geometry of the second treatment interface (32) alone or by both the two treatment interfaces, thus providing a treated reverse signal (OS3BB) having undergone a different treatment from that undergone by the treated signal (OS3) travelling in the first direction.

2. Component according to the preceding claim, **characterized in that** the selection region (R1) has:

- an input part (R10) forming a guidance that has, for the signal received at input, an input optical impedance $z0_{eff}$, and
- an output part (R12) forming a magneto-optical plasmon guidance between two magneto-plasmonic interfaces; which communicate via a selection aperture (R11) that has a selection width (We); and **in that** the values of the input optical impedance $z0_{eff}$ and of the selection width (We) are chosen so that:

- the first plasmon mode has a first optical impedance $z1_{eff}$ that is substantially equal to the input optical impedance $z0_{eff}$, and
- the second plasmon mode has a second optical impedance $z2_{eff}$ that is significantly different from the first optical impedance $z1_{eff}$;

such that the input signal (OSO) excites, in the output part (R12) and through the selection aperture (R11), an optical mode according to the first plasmon mode, to the exclusion of the second plasmon mode or with an amplitude significantly greater than that of the second plasmon mode, thus forming a selected optical signal (OS1).

3. Component according to the preceding claim, **characterized in that**

the differentiation region (R2) has a geometry having an increasing width from the input width thereof (We) to the differentiation width Wd, and
the non-reciprocal treatment region (R3) has a geometry the input width and/or the average width of which are substantially equal to the differentiation width Wd.

4. Component according to any one of the preceding claims, **characterized in that** the differentiation core (20) and/or the treatment core are made from a dielectric material, and the outer materials (210, 220, 310, 320) thereof are made from one or more metallic materials,
and **in that** these materials are chosen to produce between them a plasmon guidance interface implementing a magneto-optical effect.

5. Component according to any one of the preceding claims, **characterized in that** the differentiation core (20) and/or the treatment core are made from a metallic material, and the outer materials (210, 220, 310, 320) thereof are made from one or more dielectric materials,
and **in that** these materials are chosen to produce between them a plasmon guidance interface implementing a magneto-optical effect.

6. Component according to any one of the preceding claims, **characterized in that** the different cores (10, 20, 30) are produced, wholly or partially, in a planar or bidimensional layer (C1) included between a lower layer (C0) and an upper layer (C2), and **in that** the interfaces (21, 22, 31, 32) producing the guidance in said cores form planar or bidimensional surfaces transverse to said layers (C0, C1, C2).

7. Component according to any one of the preceding claims, **characterized in that** the selection region (R1) is arranged so that the first plasmon mode corresponds to the LRSPP-type mode of the input signal (OS0).

8. Component (1, 2) according to any one of the preceding claims, **characterized in that** the first treatment interface (31) has a geometry comprising one or more absorption cavities (311) that have a geometry arranged to absorb an optical signal of a determined frequency wholly or partially,
while the second treatment interface (32) has a geometry that is arranged to allow the passage of an optical signal (OSOB) of said determined frequency.

9. Component according to the preceding claim, **characterized in that** the first treatment interface (31) includes a plurality of absorption cavities that are dimensioned to absorb an optical signal comprising a plurality of different frequencies wholly or partially, in particular a plurality of mutually shifted frequencies so that said treatment interface absorbs all the signals within a determined frequency range,
while the second treatment interface (32) has a geometry that is arranged to allow the passage of an optical signal of one or more frequencies within said determined frequency range.

10. Component (2) according to any one of claims 8 to 9, **characterized in that** the first and second optical guides or ports (P1, P2) each comprise a selection region (R1, R1B) and a differentiation region (R2, R2B), and are linked to each other by at least one first treatment region (R3), the first treatment interface (31) of which is arranged to absorb an optical signal of one or more determined frequencies wholly or partially, and the second treatment interface (32) of which is arranged to allow the passage of said optical signal, thus producing an optical isolator for said optical signal.

11. Component (3) according to any one of the preceding claims, **characterized in that** the first treatment interface (31) of the first optical port (P1) has a geometry that forms a diversion with respect to the second treatment interface (32), in particular to end up at a different optical port (P3) or travel a different distance, or incorporate an additional or different treatment.

12. Component (3) according to the preceding claim, **characterized in that** the first treatment interface (31) of the first optical port (P1) has a geometry that connects it with the second optical port (P2) so as to guide a differentiated optical signal (OSO) originating from said first port (P1) to emit an output optical signal (OS9) via said second port (P2), while the second treatment interface (32) of said first optical port (P1) has a geometry that connects it with a third optical port (P3) different from the second port (P2), to receive a differentiated optical signal (OS9C) originating from said third port (P3) and emit it as an output optical signal (OS9C) via the first port (P1), thus producing an optical circulator.

13. Component (1, 2, 3) according to any one of the preceding claims, **characterized in that** it is arranged and determined to treat an optical signal having a wavelength less than 50 $\mu$m, and in particular less than 20 $\mu$m or 10 $\mu$m, and more particularly less than 3 $\mu$m.

14. Component (1, 2, 3) according to any one of the preceding claims, **characterized in that**, for the interfaces (21, 22, 31, 32) of the differentiation region (R2) and/or the treatment region (R3):

- the metallic material is a metal of plasmonic type or a metal alloy of plasmonic type, in particular selected from gold, silver, copper, aluminium, and a mixture of two, three or four of these materials, and
- the dielectric material is a magneto-optical material, in particular a garnet oxide or a dielectric material doped with ferrite particles, such as for example a mineral silica doped with cobalt ferrite nanoparticles.

15. Component (1, 2, 3) according to any one of claims 1 to 13, **characterized in that**, for the interfaces (21, 22, 31, 32) of the differentiation region (R2) and/or the treatment region (R3), the metallic material is a superposition of layers or a mixture of at least:

- on the one hand a metal of plasmonic type or a metal alloy of plasmonic type, in particular selected from gold, silver, copper, aluminium, and a mixture of two, three or four of these materials, and
- on the other hand a metal of magneto-optical type, in particular an iron-cobalt alloy.

16. Component (1, 2, 3) according to any one of claims 1 to 13, **characterized in that**, for the interfaces (21, 22, 31, 32) of the differentiation region (R2) and/or the treatment region (R3):

- the metallic material is a metal of magneto-optical type, in particular an iron-cobalt alloy, and
- the dielectric material is a dielectric that is not magneto-optical, in particular selected from silica, silicon nitride, germanium, silicon, and a mixture of several of these materials.

17. Device comprising one or more non-reciprocal optical components (1, 2, 3) according to any one of the preceding claims, produced in integrated fashion within an integrated optical circuit.

18. Device according to the preceding claim, **characterized in that** the integrated optical circuit includes at least one integrated laser emitter, and **in that** it comprises at least one non-reciprocal optical component (1, 2) according to any one of claims 8 to 10 that is connected to said laser in order to allow an optical signal emitted by said laser to pass in one direction, while preventing or reducing a return of the optical signal towards said laser in the opposite direction.

19. Device according to any one of claims 17 to 18, **characterized in that** the integrated optical circuit comprises a plurality of sensors produced or connected in integrated fashion, and **in that** it comprises at least one non-reciprocal optical component (3) according to claim 12 that is connected with at least two of said sensors.

20. Device according to any one of claims 17 to 18, **characterized in that** the integrated optical circuit comprises at least one non-reciprocal optical component (3) according to claim 12 that is connected to produce a Michelson interferometer in a wholly or partially integrated fashion.

21. Method for treatment of an optical signal **characterized in that** it comprises a treatment of said optical signal by passing through at least one non-reciprocal optical component (1, 2, 3) according to any one of claims 1 to 16, or within a device according to any one of claims 17 to 20.

[Fig.1]

# Fig. 1

[Fig.2]

**Fig. 2**

[Fig.3]

## Fig. 3a

## Fig. 3b

[Fig.4]

## Fig. 4

[Fig.5]

## Fig. 5

| C2 | | |
|---|---|---|
| MP <br> 220, 320 <br> Au, Ag, Cu, Al | DMO <br> 20, 30 <br> oxyde de grenat, "ferrite" | MP <br> 210, 310 <br> Au, Ag, Cu, Al |
| C0 | | |

22, 32    21, 31

[Fig.6]

**Fig. 6**

| 220, 320 | C2 | 210, 310 | |
|---|---|---|---|
| MMO FeCo | D 20, 30 SiO2, Si3N4, Ge, Si | MMO FeCo | C1 |
| MP Au, Ag, Cu, Al | | MP Au, Ag, Cu, Al | |

22, 32      21, 31

C0

[Fig.7]

**Fig. 7**

C2

| MMO 220, 320 FeCo | D 20, 30 SiO2, Si3N4, Ge, Si | MMO 210, 310 FeCo | C1 |
|---|---|---|---|

22, 32      21, 31

C0

[Fig.8]

**Fig. 8**

C2

| MMO 220, 320 FeCo | D 20, 30 SiO2, Si3N4, Ge, Si | MMO 210, 310 FeCo | C1 |
|---|---|---|---|

22, 32      21, 31

C0

## RÉFÉRENCES CITÉES DANS LA DESCRIPTION

**Documents brevets cités dans la description**

- US 8849072 B

- FR 2981761

**Littérature non-brevet citée dans la description**

- **VAN PARYS et al.** Transverse magnetic mode non-reciprocal propagation in an amplifying AlGaInAs/InP optical wave guide isolator. *Applied Physics Letters,* 2006, vol. 88, 071115

- **TAKEI ; MIZUMOTO.** Design and Simulation of Silicon Waveguide Optical Circulator employing Non Reciprocal Phase Shift. *Jpn. J. Appl. Phys.,* 2010, vol. 49, 052203